(19) **Europäisches Patentamt**
**European Patent Office**
**Office européen des brevets**

(11) **EP 3 989 577 A1**

(12) **EUROPEAN PATENT APPLICATION**
published in accordance with Art. 153(4) EPC

(43) Date of publication:
**27.04.2022 Bulletin 2022/17**

(21) Application number: **20826819.3**

(22) Date of filing: **08.06.2020**

(51) International Patent Classification (IPC):
*H04N 19/593* (2014.01)    *H04N 19/11* (2014.01)
*H04N 19/117* (2014.01)    *H04N 19/132* (2014.01)
*H04N 19/119* (2014.01)    *H04N 19/176* (2014.01)
*H04N 19/137* (2014.01)    *H04N 19/186* (2014.01)

(52) Cooperative Patent Classification (CPC):
**H04N 19/11; H04N 19/117; H04N 19/119;**
**H04N 19/132; H04N 19/137; H04N 19/176;**
**H04N 19/186; H04N 19/593**

(86) International application number:
**PCT/KR2020/007413**

(87) International publication number:
**WO 2020/256324 (24.12.2020 Gazette 2020/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.06.2019 KR 20190072495**

(71) Applicant: **Electronics and Telecommunications**
**Research Institute**
**Daejeon 34129 (KR)**

(72) Inventors:
• **LEE, Jin Ho**
**Daejeon 34075 (KR)**
• **KANG, Jung Won**
**Daejeon 34076 (KR)**
• **LEE, Ha Hyun**
**Seoul 02142 (KR)**
• **LIM, Sung Chang**
**Daejeon 34189 (KR)**
• **KIM, Hui Yong**
**Daejeon 34090 (KR)**

(74) Representative: **Betten & Resch**
**Patent- und Rechtsanwälte PartGmbB**
**Maximiliansplatz 14**
**80333 München (DE)**

(54) **VIDEO ENCODING/DECODING METHOD AND APPARATUS, AND RECORDING MEDIUM STORING BITSTREAM**

(57)    Disclosed herein are a method and an apparatus for encoding/decoding an image. The image decoding method according to the present invention includes obtaining prediction information of a current block from a bitstream and, by performing prediction based on the prediction information, generating a prediction block of the current block. Herein, the prediction information includes split prediction information of the current block. The generating of the prediction block includes obtaining a reference sample from a neighboring block of the current block, applying an interpolation filter to the reference sample, and generating the prediction block by using the reference sample to which the interpolation filter is applied. The interpolation filter is determined based on the split prediction information of the current block.

FIG. 8

```
            Start
              |  S810
   Derive intra-prediction mode
              |  S820
   Configure reference sample
              |  S830
     Perform intra prediction
              |  S840
     Predict residual signal
              |
             End
```

**Description**

**Technical Field**

The present invention relates to an image encoding/decoding method and apparatus, and a recording medium for storing a bitstream. More particularly, the present invention relates to an image encoding/decoding method and apparatus for selecting an interpolation filter, and a recoding medium for storing a bitstream.

**Background Art**

Recently, the demand for high resolution and quality images such as high definition (HD) or ultra-high definition (UHD) images has increased in various applications. As the resolution and quality of images are improved, the amount of data correspondingly increases. This is one of the causes of increase in transmission cost and storage cost when transmitting image data through existing transmission media such as wired or wireless broadband channels or when storing image data. In order to solve such problems with high resolution and quality image data, a high efficiency image encoding/decoding technique is required.

There are various video compression techniques such as an inter prediction technique of predicting the values of pixels within a current picture from the values of pixels within a preceding picture or a subsequent picture, an intra prediction technique of predicting the values of pixels within a region of a current picture from the values of pixels within another region of the current picture, a transform and quantization technique of compressing the energy of a residual signal, and an entropy coding technique of allocating frequently occurring pixel values with shorter codes and less occurring pixel values with longer codes.

**Disclosure**

**Technical Problem**

The present disclosure is to provide a video encoding/decoding method and apparatus with improved encoding/decoding efficiency.

The present disclosure is to provide a method and apparatus for encoding/decoding an image by selecting an interpolation filter.

The present disclosure is to provide a recording medium storing a bitstream generated by an image decoding method or apparatus according to the present disclosure.

**Technical Solution**

An image decoding method according to one aspect of the present disclosure, the image decoding method comprising: obtaining prediction information of a current block from a bitstream; and generating a prediction block of the current block by performing prediction based on the prediction information, wherein the prediction information comprises split prediction information of the current block, wherein the generating of the prediction block comprises, obtaining a reference sample from a neighboring block of the current block; applying an interpolation filter to the reference sample; and generating the prediction block by using the reference sample to which the interpolation filter is applied, and wherein the interpolation filter is determined based on the split prediction information of the current block.

According to an embodiment, the interpolation filter is determined as one of two interpolation filters different from each other.

According to an embodiment, the split prediction information of the current block comprises information on whether split prediction of the current block is performed and a split direction of the current block.

According to an embodiment, the split direction of the current block is a vertical direction or a horizontal direction.

According to an embodiment, the prediction information comprises information on a plurality of reference sample lines, and the interpolation filter is determined based on information on the plurality of reference sample lines.

According to an embodiment, the prediction information comprises matrix-based intra prediction mode information for the neighboring block of the current block, and when matrix-based intra prediction is performed on the neighboring block, an intra-prediction mode of the neighboring block is regarded as a Planar mode.

According to an embodiment, the neighboring block is a block located on the bottom left or top right of the current block.

According to an embodiment, when an intra-prediction mode of a luma block of the current block is a matrix-based intra-prediction mode, an intra-prediction mode of a chroma block of the current block is derived as a Planar mode.

According to an embodiment, the prediction information comprises residual signal prediction information of the current block, and an intra-prediction mode of the current block is determined based on the residual signal prediction information.

According to an embodiment, the intra-prediction mode of the current block is determined as one of a horizontal prediction mode and a vertical prediction mode based on the residual signal prediction information.

An image encoding method according to another aspect of the present disclosure, the image encoding method comprising: determining a prediction mode of a current block; generating a prediction block of the current block by performing prediction based on the prediction mode of the current block; and encoding prediction information of the current block comprising the prediction mode of the current block, wherein the prediction information comprises split prediction information of the current block, wherein the generating of the prediction block comprises obtaining a reference sample from a neighboring block of the current block; applying an interpolation filter to the reference sample; and generating the prediction block by using the reference sample to which the interpolation filter is applied, and wherein the interpolation filter is determined based on the split prediction information of the current block.

According to an embodiment, the interpolation filter is determined as one of two interpolation filters different from each other.

According to an embodiment, the split prediction information of the current block comprises information on whether or not split prediction of the current block is performed and a split direction of the current block.

According to an embodiment, the prediction information comprises information on a plurality of reference sample lines, and the interpolation filter is determined based on information on the plurality of reference sample lines.

According to an embodiment, the prediction information comprises matrix-based intra prediction mode information for the neighboring block of the current block, and when matrix-based intra prediction is performed on the neighboring block, an intra-prediction mode of the neighboring block is regarded as a Planar mode.

According to an embodiment, the neighboring block is a block located on the bottom left or top right of the current block.

According to an embodiment, when an intra-prediction mode of a luma block of the current block is a matrix-based intra-prediction mode, an intra-prediction mode of a chroma block of the current block is derived as a Planar mode.

According to an embodiment, the prediction information comprises residual signal prediction information of the current block, and an intra-prediction mode of the current block is determined based on the residual signal prediction information.

According to an embodiment, the intra-prediction mode of the current block is determined as one of a horizontal prediction mode and a vertical prediction mode based on the residual signal prediction information.

A non-transitory computer-readable recording medium configured to store a bitstream generated by an image encoding method according to another aspect of the present disclosure, wherein the image encoding method comprises determining a prediction mode of a current block; generating a prediction block of the current block by performing prediction based on the prediction mode of the current block; and encoding prediction information of the current block comprising the prediction mode of the current block, wherein the prediction information comprises split prediction information of the current block, wherein the generating of the prediction block comprises obtaining a reference sample from a neighboring block of the current block; applying an interpolation filter to the reference sample; and generating the prediction block by using the reference sample to which the interpolation filter is applied, and wherein the interpolation filter is determined based on the split prediction information of the current block.

**Advantageous Effects**

According to the present disclosure, an image encoding/decoding method and apparatus with improved encoding/decoding efficiency is provided hereby.

Further, according to the present disclosure, a method and apparatus for encoding/decoding an image by selecting an interpolation filter is provided.

Further, according to the present disclosure, a recording medium storing a bitstream generated by an image encoding method or apparatus according to the present disclosure is provided.

In addition, according to the present disclosure, a recording medium storing a bitstream that is received and decoded by the image decoding apparatus according to the present disclosure is provided and used for image restoration.

**Description of Drawings**

FIG. 1 is a block diagram showing a configuration of an encoding apparatus according to an embodiment to which the present invention is applied.
FIG. 2 is a block diagram showing a configuration of a decoding apparatus according to an embodiment and to which the present invention is applied.

FIG. 3 is a view schematically showing a partition structure of an image when encoding and decoding the image.

FIG. 4 is a view showing an intra-prediction process.

FIG. 5 is a diagram illustrating an embodiment of an inter-picture prediction process.

FIG. 6 is a diagram illustrating a transform and quantization process.

FIG. 7 is a diagram illustrating reference samples capable of being used for intra prediction.

FIG. 8 is a view for explaining an intra-prediction process according to an embodiment of the present invention.

FIG. 9 is a view for explaining a relationship between a luma block and a chroma block.

FIG. 10 is a view for explaining an intra-prediction mode of a neighboring block that is used to derive an intra-prediction mode of a current block, according to an embodiment of the present invention.

FIG. 11 is a view for explaining an embodiment of DC prediction according to the size and/or shape of a current block according to an embodiment of the present invention.

FIG. 12 is a view for explaining a process of performing intra prediction between color components according to an embodiment of the present invention.

FIG. 13 is a view for explaining an example of sample line unit-prediction according to an embodiment of the present invention.

**Mode for Invention**

A variety of modifications may be made to the present invention and there are various embodiments of the present invention, examples of which will now be provided with reference to drawings and described in detail. However, the present invention is not limited thereto, although the exemplary embodiments can be construed as including all modifications, equivalents, or substitutes in a technical concept and a technical scope of the present invention. The similar reference numerals refer to the same or similar functions in various aspects. In the drawings, the shapes and dimensions of elements may be exaggerated for clarity. In the following detailed description of the present invention, references are made to the accompanying drawings that show, by way of illustration, specific embodiments in which the invention may be practiced. These embodiments are described in sufficient detail to enable those skilled in the art to implement the present disclosure. It should be understood that various embodiments of the present disclosure, although different, are not necessarily mutually exclusive. For example, specific features, structures, and characteristics described herein, in connection with one embodiment, may be implemented within other embodiments without departing from the spirit and scope of the present disclosure. In addition, it should be understood that the location or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to what the claims claim.

Terms used in the specification, 'first', 'second', etc. can be used to describe various components, but the components are not to be construed as being limited to the terms. The terms are only used to differentiate one component from other components. For example, the 'first' component may be named the 'second' component without departing from the scope of the present invention, and the 'second' component may also be similarly named the 'first' component. The term 'and/or' includes a combination of a plurality of items or any one of a plurality of terms.

It will be understood that when an element is simply referred to as being 'connected to' or 'coupled to' another element without being 'directly connected to' or 'directly coupled to' another element in the present description, it may be 'directly connected to' or 'directly coupled to' another element or be connected to or coupled to another element, having the other element intervening therebetween. In contrast, it should be understood that when an element is referred to as being "directly coupled" or "directly connected" to another element, there are no intervening elements present.

Furthermore, constitutional parts shown in the embodiments of the present invention are independently shown so as to represent characteristic functions different from each other. Thus, it does not mean that each constitutional part is constituted in a constitutional unit of separated hardware or software. In other words, each constitutional part includes each of enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present invention, if not departing from the essence of the present invention.

The terms used in the present specification are merely used to describe particular embodiments, and are not intended to limit the present invention. An expression used in the singular encompasses the expression of the plural, unless it has a clearly different meaning in the context. In the present specification, it is to be understood that terms such as "including", "having", etc. are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added. In other words, when a specific element is referred to as being "included", elements other than the corresponding element are not excluded, but additional elements may be included in embodiments of the present invention or the scope of the present invention.

In addition, some of constituents may not be indispensable constituents performing essential functions of the present invention but be selective constituents improving only performance thereof. The present invention may be implemented by including only the indispensable constitutional parts for implementing the essence of the present invention except the constituents used in improving performance. The structure including only the indispensable constituents except the selective constituents used in improving only performance is also included in the scope of the present invention.

Hereinafter, embodiments of the present invention will be described in detail with reference to the accompanying drawings. In describing exemplary embodiments of the present invention, well-known functions or constructions will not be described in detail since they may unnecessarily obscure the understanding of the present invention. The same constituent elements in the drawings are denoted by the same reference numerals, and a repeated description of the same elements will be omitted.

Hereinafter, an image may mean a picture configuring a video, or may mean the video itself. For example, "encoding or decoding or both of an image" may mean "encoding or decoding or both of a moving picture", and may mean "encoding or decoding or both of one image among images of a moving picture."

Hereinafter, terms "moving picture" and "video" may be used as the same meaning and be replaced with each other.

Hereinafter, a target image may be an encoding target image which is a target of encoding and/or a decoding target image which is a target of decoding. Also, a target image may be an input image inputted to an encoding apparatus, and an input image inputted to a decoding apparatus. Here, a target image may have the same meaning with the current image.

Hereinafter, terms "image", "picture, "frame" and "screen" may be used as the same meaning and be replaced with each other.

Hereinafter, a target block may be an encoding target block which is a target of encoding and/or a decoding target block which is a target of decoding. Also, a target block may be the current block which is a target of current encoding and/or decoding. For example, terms "target block" and "current block" may be used as the same meaning and be replaced with each other.

Hereinafter, terms "block" and "unit" may be used as the same meaning and be replaced with each other. Or a "block" may represent a specific unit.

Hereinafter, terms "region" and "segment" may be replaced with each other.

Hereinafter, a specific signal may be a signal representing a specific block. For example, an original signal may be a signal representing a target block. A prediction signal may be a signal representing a prediction block. A residual signal may be a signal representing a residual block.

In embodiments, each of specific information, data, flag, index, element and attribute, etc. may have a value. A value of information, data, flag, index, element and attribute equal to "0" may represent a logical false or the first predefined value. In other words, a value "0", a false, a logical false and the first predefined value may be replaced with each other. A value of information, data, flag, index, element and attribute equal to "1" may represent a logical true or the second predefined value. In other words, a value "1", a true, a logical true and the second predefined value may be replaced with each other.

When a variable i or j is used for representing a column, a row or an index, a value of i may be an integer equal to or greater than 0, or equal to or greater than 1. That is, the column, the row, the index, etc. may be counted from 0 or may be counted from 1.

Description of terms

Encoder: means an apparatus performing encoding. That is, means an encoding apparatus.

Decoder: means an apparatus performing decoding. That is, means an decoding apparatus.

Block: is an MxN array of a sample. Herein, M and N may mean positive integers, and the block may mean a sample array of a two-dimensional form. The block may refer to a unit. A current block my mean an encoding target block that becomes a target when encoding, or a decoding target block that becomes a target when decoding. In addition, the current block may be at least one of an encode block, a prediction block, a residual block, and a transform block.

Sample: is a basic unit constituting a block. It may be expressed as a value from 0 to $2^{B_d} - 1$ according to a bit depth ($B_d$). In the present invention, the sample may be used as a meaning of a pixel. That is, a sample, a pel, a pixel may have the same meaning with each other.

Unit: may refer to an encoding and decoding unit. When encoding and decoding an image, the unit may be a region generated by partitioning a single image. In addition, the unit may mean a subdivided unit when a single image is partitioned into subdivided units during encoding or decoding. That is, an image may be partitioned into a plurality of units. When encoding and decoding an image, a predetermined process for each unit may be performed. A single unit may be partitioned into sub-units that have sizes smaller than the size of the unit. Depending on functions, the unit may mean a block, a macroblock, a coding tree unit, a code tree block, a coding unit, a coding block), a prediction unit, a prediction block, a residual unit), a residual block, a transform unit, a transform block, etc. In addition, in order to distinguish a unit from a block, the unit may include a luma component block, a chroma component block associated with the luma component block, and a syntax element of each color component block. The unit may have various sizes and forms, and particularly, the form of the unit may be a two-dimensional geometrical figure such as a square shape, a rectangular shape, a trapezoid shape, a triangular shape, a pentagonal shape, etc. In addition, unit information may include at least one of a unit type indicating the coding unit, the prediction unit, the transform unit, etc., and a unit size, a unit depth, a sequence of encoding and decoding of a unit, etc.

Coding Tree Unit: is configured with a single coding tree block of a luma component Y, and two coding tree blocks related to chroma components Cb and Cr. In addition, it may mean that including the blocks and a syntax element of each block. Each coding tree unit may be partitioned by using at least one of a quad-tree partitioning method, a binary-tree partitioning method and ternary-tree partitioning method to configure a lower unit such as coding unit, prediction unit, transform unit, etc. It may be used as a term for designating a sample block that becomes a process unit when encoding/decoding an image as an input image. Here, the quad-tree may mean a quarternary-tree.

When the size of the coding block is within a predetermined range, the division is possible using only quad-tree partitioning. Here, the predetermined range may be defined as at least one of a maximum size and a minimum size of a coding block in which the division is possible using only quad-tree partitioning. Information indicating a maximum/minimum size of a coding block in which quad-tree partitioning is allowed may be signaled through a bitstream, and the information may be signaled in at least one unit of a sequence, a picture parameter, a tile group, or a slice (segment). Alternatively, the maximum/minimum size of the coding block may be a fixed size predetermined in the coder/decoder. For example, when the size of the coding block corresponds to 256x256 to 64×64, the division is possible only using quad-tree partitioning. Alternatively, when the size of the coding block is larger than the size of the maximum conversion block, the division is possible only using quad-tree partitioning. Herein, the block to be divided may be at least one of a coding block and a transform block. In this case, information indicating the division of the coded block (for example, split flag) may be a flag indicating whether or not to perform the quad-tree partitioning. When the size of the coding block falls within a predetermined range, the division is possible only using binary tree or ternary tree partitioning. In this case, the above description of the quad-tree partitioning may be applied to binary tree partitioning or ternary tree partitioning in the same manner.

Coding Tree Block: may be used as a term for designating any one of a Y coding tree block, Cb coding tree block, and Cr coding tree block.

Neighbor Block: may mean a block adjacent to a current block. The block adjacent to the current block may mean a block that comes into contact with a boundary of the current block, or a block positioned within a predetermined distance from the current block. The neighbor block may mean a block adjacent to a vertex of the current block. Herein, the block adjacent to the vertex of the current block may mean a block vertically adjacent to a neighbor block that is horizontally adjacent to the current block, or a block horizontally adjacent to a neighbor block that is vertically adjacent to the current block.

Reconstructed Neighbor block: may mean a neighbor block adjacent to a current block and which has been already spatially/temporally encoded or decoded. Herein, the reconstructed neighbor block may mean a reconstructed neighbor unit. A reconstructed spatial neighbor block may be a block within a current picture and which has been already reconstructed through encoding or decoding or both. A reconstructed temporal neighbor block is a block at a corresponding position as the current block of the current picture within a reference image, or a neighbor block thereof.

Unit Depth: may mean a partitioned degree of a unit. In a tree structure, the highest node(Root Node) may correspond to the first unit which is not partitioned. Also, the highest node may have the least depth value. In this case, the highest node may have a depth of level 0. A node having a depth of level 1 may represent a unit generated by partitioning once the first unit. A node having a depth of level 2 may represent a unit generated by partitioning twice the first unit. A node having a depth of level n may represent a unit generated by partitioning n-times the first unit. A Leaf Node may be the lowest node and a node which cannot be partitioned further. A depth of a Leaf Node may be the maximum level. For example, a predefined value of the maximum level may be 3. A depth of a root node may be the lowest and a depth of a leaf node may be the deepest. In addition, when a unit is expressed as a tree structure, a level in which a unit is present may mean a unit depth.

Bitstream: may mean a bitstream including encoding image information.

Parameter Set: corresponds to header information among a configuration within a bitstream. At least one of a video parameter set, a sequence parameter set, a picture parameter set, and an adaptation parameter set may be included in a parameter set. In addition, a parameter set may include a slice header, a tile group header, and tile header information. The term "tile group" means a group of tiles and has the same meaning as a slice.

An adaptation parameter set may mean a parameter set that can be shared by being referred to in different pictures, subpictures, slices, tile groups, tiles, or bricks. In addition, information in an adaptation parameter set may be used by referring to different adaptation parameter sets for a subpicture, a slice, a tile group, a tile, or a brick inside a picture.

In addition, regarding the adaptation parameter set, different adaptation parameter sets may be referred to by using identifiers of different adaptation parameter sets for a subpicture, a slice, a tile group, a tile, or a brick inside a picture.

In addition, regarding the adaptation parameter set, different adaptation parameter sets may be referred to by using identifiers of different adaptation parameter sets for a slice, a tile group, a tile, or a brick inside a subpicture.

In addition, regarding the adaptation parameter set, different adaptation parameter sets may be referred to by using identifiers of different adaptation parameter sets for a tile or a brick inside a slice.

In addition, regarding the adaptation parameter set, different adaptation parameter sets may be referred to by using identifiers of different adaptation parameter sets for a brick inside a tile.

Information on an adaptation parameter set identifier may be included in a parameter set or a header of the subpicture, and an adaptation parameter set corresponding to the adaptation parameter set identifier may be used for the subpicture.

The information on the adaptation parameter set identifier may be included in a parameter set or a header of the tile, and an adaptation parameter set corresponding to the adaptation parameter set identifier may be used for the tile.

The information on the adaptation parameter set identifier may be included in a header of the brick, and an adaptation parameter set corresponding to the adaptation parameter set identifier may be used for the brick.

The picture may be partitioned into one or more tile rows and one or more tile columns.

The subpicture may be partitioned into one or more tile rows and one or more tile columns within a picture. The subpicture may be a region having the form of a rectangle/square within a picture and may include one or more CTUs. In addition, at least one or more tiles/bricks/slices may be included within one subpicture.

The tile may be a region having the form of a rectangle/square within a picture and may include one or more CTUs. In addition, the tile may be partitioned into one or more bricks.

The brick may mean one or more CTU rows within a tile. The tile may be partitioned into one or more bricks, and each brick may have at least one or more CTU rows. A tile that is not partitioned into two or more may mean a brick.

The slice may include one or more tiles within a picture and may include one or more bricks within a tile.

Parsing: may mean determination of a value of a syntax element by performing entropy decoding, or may mean the entropy decoding itself.

Symbol: may mean at least one of a syntax element, a coding parameter, and a transform coefficient value of an encoding/decoding target unit. In addition, the symbol may mean an entropy encoding target or an entropy decoding result.

Prediction Mode: may be information indicating a mode encoded/decoded with intra prediction or a mode encoded/decoded with inter prediction.

Prediction Unit: may mean a basic unit when performing prediction such as inter-prediction, intra-prediction, inter-compensation, intra-compensation, and motion compensation. A single prediction unit may be partitioned into a plurality of partitions having a smaller size, or may be partitioned into a plurality of lower prediction units. A plurality of partitions may be a basic unit in performing prediction or compensation. A partition which is generated by dividing a prediction unit may also be a prediction unit.

Prediction Unit Partition: may mean a form obtained by partitioning a prediction unit.

Reference picture list may refer to a list including one or more reference pictures used for inter prediction or motion compensation. There are several types of usable reference picture lists, including LC (List combined), L0 (List 0), L1 (List 1), L2 (List 2), L3 (List 3).

Inter prediction indicator may refer to a direction of inter prediction (unidirectional prediction, bidirectional prediction, etc.) of a current block. Alternatively, it may refer to the number of reference pictures used to generate a prediction block of a current block. Alternatively, it may refer to the number of prediction blocks used at the time of performing inter prediction or motion compensation on a current block.

Prediction list utilization flag indicates whether a prediction block is generated using at least one reference picture in a specific reference picture list. An inter prediction indicator can be derived using a prediction list utilization flag, and conversely, a prediction list utilization flag can be derived using an inter prediction indicator. For example, when the prediction list utilization flag has a first value of zero (0), it means that a reference picture in a reference picture list is not used to generate a prediction block. On the other hand, when the prediction list utilization flag has a second value of one (1), it means that a reference picture list is used to generate a prediction block.

Reference picture index may refer to an index indicating a specific reference picture in a reference picture list.

Reference picture may mean a reference picture which is referred to by a specific block for the purposes of inter prediction or motion compensation of the specific block. Alternatively, the reference picture may be a picture including a reference block referred to by a current block for inter prediction or motion compensation. Hereinafter, the terms "reference picture" and "reference image" have the same meaning and can be interchangeably.

Motion vector may be a two-dimensional vector used for inter prediction or motion compensation. The motion vector may mean an offset between an encoding/decoding target block and a reference block. For example, (mvX, mvY) may represent a motion vector. Here, mvX may represent a horizontal component and mvY may represent a vertical component.

Search range may be a two-dimensional region which is searched to retrieve a motion vector during inter prediction. For example, the size of the search range may be MxN. Here, M and N are both integers.

Motion vector candidate may refer to a prediction candidate block or a motion vector of the prediction candidate block when predicting a motion vector. In addition, a motion vector candidate may be included in a motion vector candidate list.

Motion vector candidate list may mean a list composed of one or more motion vector candidates.

Motion vector candidate index may mean an indicator indicating a motion vector candidate in a motion vector candidate list. Alternatively, it may be an index of a motion vector predictor.

Motion information may mean information including at least one of the items including a motion vector, a reference picture index, an inter prediction indicator, a prediction list utilization flag, reference picture list information, a reference picture, a motion vector candidate, a motion vector candidate index, a merge candidate, and a merge index.

Merge candidate list may mean a list composed of one or more merge candidates.

Merge candidate may mean a spatial merge candidate, a temporal merge candidate, a combined merge candidate, a combined bi-predictive merge candidate, or a zero merge candidate. The merge candidate may include motion information such as an inter prediction indicator, a reference picture index for each list, a motion vector, a prediction list utilization flag, and an inter prediction indicator.

Merge index may mean an indicator indicating a merge candidate in a merge candidate list. Alternatively, the merge index may indicate a block from which a merge candidate has been derived, among reconstructed blocks spatially/temporally adjacent to a current block. Alternatively, the merge index may indicate at least one piece of motion information of a merge candidate.

Transform Unit: may mean a basic unit when performing encoding/decoding such as transform, inverse-transform, quantization, dequantization, transform coefficient encoding/decoding of a residual signal. A single transform unit may be partitioned into a plurality of lower-level transform units having a smaller size. Here, transformation/inverse-transformation may comprise at least one among the first transformation/the first inverse-transformation and the second transformation/the second inverse-transformation.

Scaling: may mean a process of multiplying a quantized level by a factor. A transform coefficient may be generated by scaling a quantized level. The scaling also may be referred to as dequantization.

Quantization Parameter: may mean a value used when generating a quantized level using a transform coefficient during quantization. The quantization parameter also may mean a value used when generating a transform coefficient by scaling a quantized level during dequantization. The quantization parameter may be a value mapped on a quantization step size.

Delta Quantization Parameter: may mean a difference value between a predicted quantization parameter and a quantization parameter of an encoding/decoding target unit.

Scan: may mean a method of sequencing coefficients within a unit, a block or a matrix. For example, changing a two-dimensional matrix of coefficients into a one-dimensional matrix may be referred to as scanning, and changing a one-dimensional matrix of coefficients into a two-dimensional matrix may be referred to as scanning or inverse scanning.

Transform Coefficient: may mean a coefficient value generated after transform is performed in an encoder. It may mean a coefficient value generated after at least one of entropy decoding and dequantization is performed in a decoder. A quantized level obtained by quantizing a transform coefficient or a residual signal, or a quantized transform coefficient level also may fall within the meaning of the transform coefficient.

Quantized Level: may mean a value generated by quantizing a transform coefficient or a residual signal in an encoder. Alternatively, the quantized level may mean a value that is a dequantization target to undergo dequantization in a decoder. Similarly, a quantized transform coefficient level that is a result of transform and quantization also may fall within the meaning of the quantized level.

Non-zero Transform Coefficient: may mean a transform coefficient having a value other than zero, or a transform coefficient level or a quantized level having a value other than zero.

Quantization Matrix: may mean a matrix used in a quantization process or a dequantization process performed to improve subjective or objective image quality. The quantization matrix also may be referred to as a scaling list.

Quantization Matrix Coefficient: may mean each element within a quantization matrix. The quantization matrix coefficient also may be referred to as a matrix coefficient.

Default Matrix: may mean a predetermined quantization matrix preliminarily defined in an encoder or a decoder.

Non-default Matrix: may mean a quantization matrix that is not preliminarily defined in an encoder or a decoder but is signaled by a user.

Statistic Value: a statistic value for at least one among a variable, a coding parameter, a constant value, etc.

which have a computable specific value may be one or more among an average value, a sum value, a weighted average value, a weighted sum value, the minimum value, the maximum value, the most frequent value, a median value, an interpolated value of the corresponding specific values.

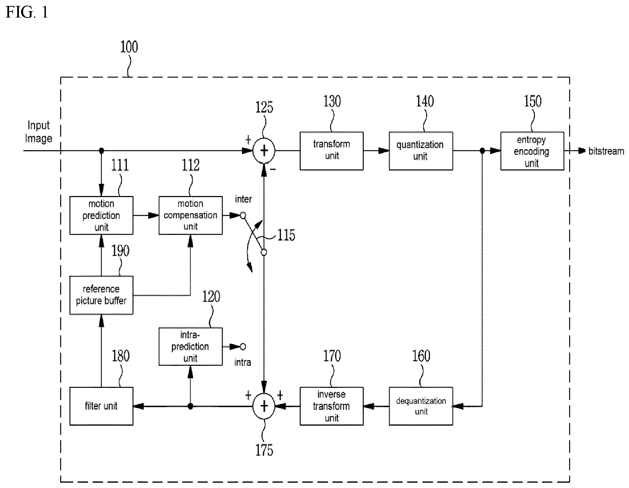

FIG. 1 is a block diagram showing a configuration of an encoding apparatus according to an embodiment to which the present invention is applied.

An encoding apparatus 100 may be an encoder, a video encoding apparatus, or an image encoding apparatus. A video may include at least one image. The encoding apparatus 100 may sequentially encode at least one image.

Referring to FIG. 1, the encoding apparatus 100 may include a motion prediction unit 111, a motion compensation unit 112, an intra-prediction unit 120, a switch 115, a subtractor 125, a transform unit 130, a quantization unit 140, an entropy encoding unit 150, a dequantization unit 160, an inverse-transform unit 170, an adder 175, a filter unit 180, and a reference picture buffer 190.

The encoding apparatus 100 may perform encoding of an input image by using an intra mode or an inter mode or both. In addition, encoding apparatus 100 may generate a bitstream including encoded information through encoding the input image, and output the generated bitstream. The generated bitstream may be stored in a computer readable recording medium, or may be streamed through a wired/wireless transmission medium. When an intra mode is used as a prediction mode, the switch 115 may be switched to an intra. Alternatively, when an inter mode is used as a prediction mode, the switch 115 may be switched to an inter mode. Herein, the intra mode may mean an intra-prediction mode, and the inter mode may mean an inter-prediction mode. The encoding apparatus 100 may generate a prediction block for an input block of the input image. In addition, the encoding apparatus 100 may encode a residual block using a residual of the input block and the prediction block after the prediction block being generated. The input image may be called as a current image that is a current encoding target. The input block may be called as a current block that is current encoding target, or as an encoding target block.

When a prediction mode is an intra mode, the intra-prediction unit 120 may use a sample of a block that has been already encoded/decoded and is adjacent to a current block as a reference sample. The intra-prediction unit 120 may perform spatial prediction for the current block by using a reference sample, or generate prediction samples of an input block by performing spatial prediction. Herein, the intra prediction may mean intra-prediction,

When a prediction mode is an inter mode, the motion prediction unit 111 may retrieve a region that best matches with an input block from a reference image when performing motion prediction, and deduce a motion vector by using the retrieved region. In this case, a search region may be used as the region. The reference image may be stored in the reference picture buffer 190. Here, when encoding/decoding for the reference image is performed, it may be stored in the reference picture buffer 190.

The motion compensation unit 112 may generate a prediction block by performing motion compensation for the current block using a motion vector. Herein, inter-prediction may mean inter-prediction or motion compensation.

When the value of the motion vector is not an integer, the motion prediction unit 111 and the motion compensation unit 112 may generate the prediction block by applying an interpolation filter to a partial region of the reference picture. In order to perform inter-picture prediction or motion compensation on a coding unit, it may be determined that which mode among a skip mode, a merge mode, an advanced motion vector prediction (AMVP) mode, and a current picture referring mode is used for motion prediction and motion compensation of a prediction unit included in the corresponding coding unit. Then, inter-picture prediction or motion compensation may be differently performed depending on the determined mode.

The subtractor 125 may generate a residual block by using a difference of an input block and a prediction block. The residual block may be called as a residual signal. The residual signal may mean a difference between an original signal and a prediction signal. In addition, the residual signal may be a signal generated by transforming or quantizing, or transforming and quantizing a difference between the original signal and the prediction signal. The residual block may be a residual signal of a block unit.

The transform unit 130 may generate a transform coefficient by performing transform of a residual block, and output the generated transform coefficient. Herein, the transform coefficient may be a coefficient value generated by performing transform of the residual block. When a transform skip mode is applied, the transform unit 130 may skip transform of the residual block.

A quantized level may be generated by applying quantization to the transform coefficient or to the residual signal. Hereinafter, the quantized level may be also called as a transform coefficient in embodiments.

The quantization unit 140 may generate a quantized level by quantizing the transform coefficient or the residual signal according to a parameter, and output the generated quantized level. Herein, the quantization unit 140 may quantize the transform coefficient by using a quantization matrix.

The entropy encoding unit 150 may generate a bitstream by performing entropy encoding according to a probability distribution on values calculated by the quantization unit 140 or on coding parameter values calculated when performing encoding, and output the generated bitstream. The entropy encoding unit 150 may perform entropy encoding of sample information of an image and information for decoding an image. For example, the information for decoding the image may include a syntax element.

When entropy encoding is applied, symbols are represented so that a smaller number of bits are assigned to a symbol having a high chance of being generated and a larger number of bits are assigned to a symbol having a low chance of being generated, and thus, the size of bit stream for symbols to be encoded may be decreased. The entropy encoding unit 150 may use an encoding method for entropy encoding such as exponential Golomb, context-adaptive variable length coding (CAVLC), context-adaptive binary arithmetic coding (CABAC), etc. For example, the entropy encoding unit 150 may perform entropy encoding by using a variable length coding/code (VLC) table. In addition, the entropy encoding unit 150 may deduce a binarization method of a target symbol and a probability model of a target symbol/bin, and perform arithmetic coding by using the deduced binarization method, and a context model.

In order to encode a transform coefficient level(quantized level), the entropy encoding unit 150 may change a two-dimensional block form coefficient into a one-dimensional vector form by using a transform coefficient scanning method.

A coding parameter may include information (flag, index, etc.) such as syntax element that is encoded in an encoder and signaled to a decoder, and information derived when performing encoding or decoding. The coding parameter may mean information required when encoding or decoding an image. For example, at least one value or a combination form of a unit/block size, a unit/block depth, unit/block partition information, unit/block shape, unit/block partition structure, whether to partition of a quad-tree form, whether to partition of a binary-tree form, a partition direction of a binary-tree form (horizontal direction or vertical direction), a partition form of a binary-tree form (symmetric partition or asymmetric partition), whether or not a current coding unit is partitioned by ternary tree partitioning, direction (horizontal or vertical direction) of the ternary tree partitioning, type (symmetric or asymmetric type) of the ternary tree partitioning, whether a current coding unit is partitioned by multi-type tree partitioning, direction (horizontal or vertical direction) of the multi-type three partitioning, type (symmetric or asymmetric type) of the multi-type tree partitioning, and a tree (binary tree or ternary tree) structure of the multi-type tree partitioning, a prediction mode(intra prediction or inter prediction), a luma intra-prediction mode/direction, a chroma intra-prediction mode/direction, intra partition information, inter partition information, a coding block partition flag, a prediction block partition flag, a transform block partition flag, a reference sample filtering method, a reference sample filter tab, a reference sample filter coefficient, a prediction block filtering method, a prediction block filter tap, a prediction block filter coefficient, a prediction block boundary filtering method, a prediction block boundary filter tab, a prediction block boundary filter coefficient, an intra-prediction mode, an inter-prediction mode, motion information, a motion vector, a motion vector difference, a reference picture index, a inter-prediction angle, an inter-prediction indicator, a prediction list utilization flag, a reference picture list, a reference picture, a motion vector predictor index, a motion vector predictor candidate, a motion vector candidate list, whether to use a merge mode, a merge index, a merge candidate, a merge candidate list, whether to use a skip mode, an interpolation filter type, an interpolation filter tab, an interpolation filter coefficient, a motion vector size, a presentation accuracy of a motion vector, a transform type, a transform size, information of whether or not a primary(first) transform is used, information of whether or not a secondary transform is used, a primary transform index, a secondary transform index, information of whether or not a residual signal is present, a coded block pattern, a coded block flag(CBF), a quantization parameter, a quantization parameter residue, a quantization matrix, whether to apply an intra loop filter, an intra loop filter coefficient, an intra loop filter tab, an intra loop filter shape/form, whether to apply a deblocking filter, a deblocking filter coefficient, a deblocking filter tab, a deblocking filter strength, a deblocking filter shape/form, whether to apply an adaptive sample offset, an adaptive sample offset value, an adaptive sample offset category, an adaptive sample offset type, whether to apply an adaptive loop filter, an adaptive loop filter coefficient, an adaptive loop filter tab, an adaptive loop filter shape/form, a binarization/inverse-binarization method, a context model determining method, a context model updating method, whether to perform a regular mode, whether to perform a bypass mode, a context bin, a bypass bin, a significant coefficient flag, a last significant coefficient flag, a coded flag for a unit of a coefficient group, a position of the last significant coefficient, a flag for whether a value of a coefficient is larger than 1, a flag for whether a value of a coefficient is larger than 2, a flag for whether a value of a coefficient is larger than 3, information on a remaining coefficient value, a sign information, a reconstructed luma sample, a reconstructed chroma sample, a residual luma sample, a residual chroma sample, a luma transform coefficient, a chroma transform coefficient, a quantized luma level, a quantized chroma level, a transform coefficient level scanning method, a size of a motion vector search area at a decoder side, a shape of a motion vector search area at a decoder side, a number of time of a motion vector search at a decoder side, information on a CTU size, information on a minimum block size, information on a maximum block size, information on a maximum block depth, information on a minimum block depth, an image displaying/outputting sequence, slice identification information, a slice type, slice partition information, tile identification information, a tile type, tile partition information, tile group identification information, a tile group type, tile group partition information, a picture type, a bit depth of an input sample, a bit depth of a reconstruction sample, a bit depth of a residual sample, a bit depth of a transform coefficient, a bit depth of a quantized level, and information on a luma signal or information on a chroma signal may be included in the coding parameter.

Herein, signaling the flag or index may mean that a corresponding flag or index is entropy encoded and included in a bitstream by an encoder, and may mean that the corresponding flag or index is entropy decoded from a bitstream by a decoder.

When the encoding apparatus 100 performs encoding through inter-prediction, an encoded current image may be used as a reference image for another image that is processed afterwards. Accordingly, the encoding apparatus 100 may reconstruct or decode the encoded current image, or store the reconstructed or decoded image as a reference image in reference picture buffer 190.

A quantized level may be dequantized in the dequantization unit 160, or may be inverse-transformed in the inverse-transform unit 170. A dequantized or inverse-transformed coefficient or both may be added with a prediction block by the adder 175. By adding the dequantized or inverse-transformed coefficient or both with the prediction block, a reconstructed block may be generated. Herein, the dequantized or inverse-transformed coefficient or both may mean a coefficient on which at least one of dequantization and inverse-transform is performed, and may mean a reconstructed residual block.

A reconstructed block may pass through the filter unit 180. The filter unit 180 may apply at least one of a deblocking filter, a sample adaptive offset (SAO), and an adaptive loop filter (ALF) to a reconstructed sample, a reconstructed block or a reconstructed image. The filter unit 180 may be called as an in-loop filter.

The deblocking filter may remove block distortion generated in boundaries between blocks. In order to determine whether or not to apply a deblocking filter, whether or not to apply a deblocking filter to a current block may be determined based samples included in several rows or columns which are included in the block. When a deblocking filter is applied to a block, another filter may be applied according to a required deblocking filtering strength.

In order to compensate an encoding error, a proper offset value may be added to a sample value by using a sample adaptive offset. The sample adaptive offset may correct an offset of a deblocked image from an original image by a sample unit. A method of partitioning samples of an image into a predetermined number of regions, determining a region to which an offset is applied, and applying the offset to the determined region, or a method of applying an offset in consideration of edge information on each sample may be used.

The adaptive loop filter may perform filtering based on a comparison result of the filtered reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the ALF to be applied to each block may vary.

The reconstructed block or the reconstructed image having passed through the filter unit 180 may be stored in the reference picture buffer 190. A reconstructed block processed by the filter unit 180 may be a part of a reference image. That is, a reference image is a reconstructed image composed of reconstructed blocks processed by the filter unit 180. The stored reference image may be used later in inter prediction or motion compensation.

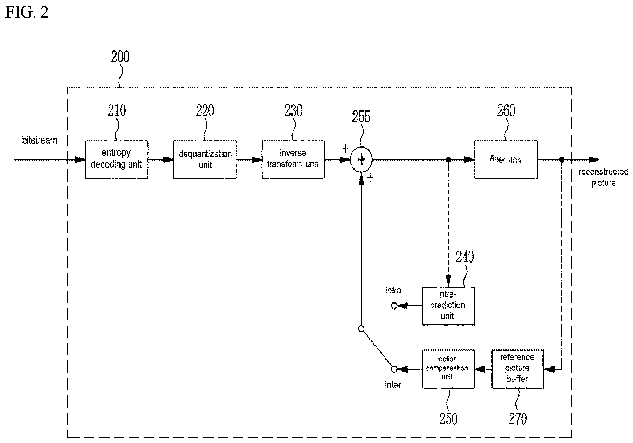

FIG. 2 is a block diagram showing a configuration of a decoding apparatus according to an embodiment and to which the present invention is applied.

A decoding apparatus 200 may a decoder, a video decoding apparatus, or an image decoding apparatus.

Referring to FIG. 2, the decoding apparatus 200 may include an entropy decoding unit 210, a dequantization unit 220, an inverse-transform unit 230, an intra-prediction unit 240, a motion compensation unit 250, an adder 255, a filter unit 260, and a reference picture buffer 270.

The decoding apparatus 200 may receive a bitstream output from the encoding apparatus 100. The decoding apparatus 200 may receive a bitstream stored in a computer readable recording medium, or may receive a bitstream that is streamed through a wired/wireless transmission medium. The decoding apparatus 200 may decode the bitstream by using an intra mode or an inter mode. In addition, the decoding apparatus 200 may generate a reconstructed image generated through decoding or a decoded image, and output the reconstructed image or decoded image.

When a prediction mode used when decoding is an intra mode, a switch may be switched to an intra. Alternatively, when a prediction mode used when decoding is an inter mode, a switch may be switched to an inter mode.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block with the prediction block. The decoding target block may be called a current block.

The entropy decoding unit 210 may generate symbols by entropy decoding the bitstream according to a probability distribution. The generated symbols may include a symbol of a quantized level form. Herein, an entropy decoding method may be an inverse-process of the entropy encoding method described above.

In order to decode a transform coefficient level(quantized level), the entropy decoding unit 210 may change a one-directional vector form coefficient into a two-dimensional block form by using a transform coefficient scanning method.

A quantized level may be dequantized in the dequantization unit 220, or inverse-transformed in the inverse-transform unit 230. The quantized level may be a result of dequantizing or inverse-transforming or both, and may be generated as a reconstructed residual block. Herein, the dequantization unit 220 may apply a quantization matrix to the quantized level.

When an intra mode is used, the intra-prediction unit 240 may generate a prediction block by performing, for the current block, spatial prediction that uses a sample value of a block adjacent to a decoding target block and which has been already decoded.

When an inter mode is used, the motion compensation unit 250 may generate a prediction block by performing, for the current block, motion compensation that uses a motion vector and a reference image stored in the reference picture buffer 270.

The adder 255 may generate a reconstructed block by adding the reconstructed residual block with the prediction block. The filter unit 260 may apply at least one of a deblocking filter, a sample adaptive offset, and an adaptive loop filter to the reconstructed block or reconstructed image. The filter unit 260 may output the reconstructed image. The reconstructed block or reconstructed image may be stored in the reference picture buffer 270 and used when performing inter-prediction. A reconstructed block processed by the filter unit 260 may be a part of a reference image. That is, a reference image is a reconstructed image composed of reconstructed blocks processed by the filter unit 260. The stored reference image may be used later in inter prediction or motion compensation.

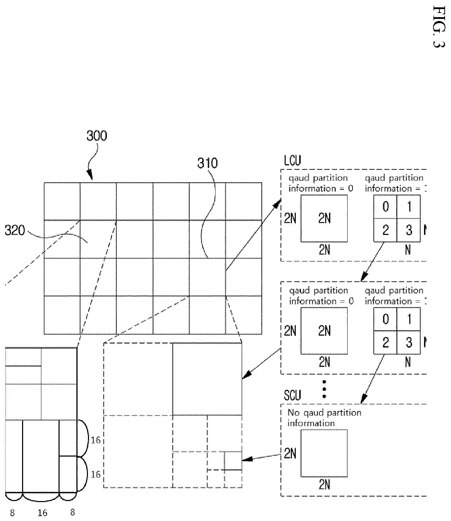

FIG. 3 is a view schematically showing a partition structure of an image when encoding and decoding the image. FIG. 3 schematically shows an example of partitioning a single unit into a plurality of lower units.

In order to efficiently partition an image, when encoding and decoding, a coding unit (CU) may be used. The coding unit may be used as a basic unit when encoding/decoding the image. In addition, the coding unit may be used as a unit for distinguishing an intra prediction mode and an inter prediction mode when encoding/decoding the image. The coding unit may be a basic unit used for prediction, transform, quantization, inverse-transform, dequantization, or an encoding/decoding process of a transform coefficient.

Referring to FIG. 3, an image 300 is sequentially partitioned in a largest coding unit (LCU), and a LCU unit is determined as a partition structure. Herein, the LCU may be used in the same meaning as a coding tree unit (CTU). A unit partitioning may mean partitioning a block associated with to the unit. In block partition information, information of a unit depth may be included. Depth information may represent a number of times or a degree or both in which a unit is partitioned. A single unit may be partitioned into a plurality of lower level units hierarchically associated with depth information based on a tree structure. In other words, a unit and a lower level unit generated by partitioning the unit may correspond to a node and a child node of the node, respectively. Each of partitioned lower unit may have depth information. Depth information may be information representing a size of a CU, and may be stored in each CU. Unit depth represents times and/or degrees related to partitioning a unit. Therefore, partitioning information of a lower-level unit may comprise information on a size of the lower-level unit.

A partition structure may mean a distribution of a coding unit (CU) within an LCU 310. Such a distribution may be determined according to whether or not to partition a single CU into a plurality (positive integer equal to or greater than 2 including 2, 4, 8, 16, etc.) of CUs. A horizontal size and a vertical size of the CU generated by partitioning may respectively be half of a horizontal size and a vertical size of the CU before partitioning, or may respectively have sizes smaller than a horizontal size and a vertical size before partitioning according to a number of times of partitioning. The CU may be recursively partitioned into a plurality of CUs. By the recursive partitioning, at least one among a height and a width of a CU after partitioning may decrease comparing with at least one among a height and a width of a CU before partitioning. Partitioning of the CU may be recursively performed until to a predefined depth or predefined size. For example, a depth of an LCU may be 0, and a depth of a smallest coding unit (SCU) may be a predefined maximum depth. Herein, the LCU may be a coding unit having a maximum coding unit size, and the SCU may be a coding unit having a minimum coding unit size as described above. Partitioning is started from the LCU 310, a CU depth increases by 1 as a horizontal size or a vertical size or both of the CU decreases by partitioning. For example, for each depth, a CU which is not partitioned may have a size of 2Nx2N. Also, in case of a CU which is partitioned, a CU with a size of 2Nx2N may be partitioned into four CUs with a size of NxN. A size of N may decrease to half as a depth increase by 1.

In addition, information whether or not the CU is partitioned may be represented by using partition information of the CU. The partition information may be 1-bit information. All CUs, except for a SCU, may include partition information. For example, when a value of partition information is a first value, the CU may not be partitioned, when a value of partition information is a second value, the CU may be partitioned

Referring to FIG. 3, an LCU having a depth 0 may be a 64x64 block. 0 may be a minimum depth. A SCU having a depth 3 may be an 8x8 block. 3 may be a maximum depth. A CU of a 32x32 block and a 16x16 block may be respectively represented as a depth 1 and a depth 2.

For example, when a single coding unit is partitioned into four coding units, a horizontal size and a vertical size of the four partitioned coding units may be a half size of a horizontal and vertical size of the CU before being partitioned. In one embodiment, when a coding unit having a 32x32 size is partitioned into four coding units, each of the four partitioned coding units may have a 16x16 size. When a single coding unit is partitioned into four coding units, it may be called that the coding unit may be partitioned into a quad-tree form.

For example, when one coding unit is partitioned into two sub-coding units, the horizontal or vertical size (width or height) of each of the two sub-coding units may be half the horizontal or vertical size of the original coding unit. For example, when a coding unit having a size of 32x32 is vertically partitioned into two sub-coding units, each of the two sub-coding units may have a size of 16x32. For example, when a coding unit having a size of 8x32 is horizontally partitioned into two sub-coding units, each of the two sub-coding units may have a size of 8x16. When one coding unit is partitioned into two sub-coding units, it can be said that the coding unit is binary-partitioned or is partitioned by a binary tree partition structure.

For example, when one coding unit is partitioned into three sub-coding units, the horizontal or vertical size of the coding unit can be partitioned with a ratio of 1:2:1, thereby producing three sub-coding units whose horizontal or vertical sizes are in a ratio of 1:2:1. For example, when a coding unit having a size of 16x32 is horizontally partitioned into three sub-coding units, the three sub-coding units may have sizes of 16x8, $16 \times 16$, and 16x8 respectively, in the order from the uppermost to the lowermost sub-coding unit. For example, when a coding unit having a size of 32x32 is vertically split into three sub-coding units, the three sub-coding units may have sizes of 8x32, 16x32, and 8x32, respectively in the order from the left to the right sub-coding unit. When one coding unit is partitioned into three sub-coding units, it can be said that the coding unit is ternary-partitioned or partitioned by a ternary tree partition structure.

In FIG. 3, a coding tree unit (CTU) 320 is an example of a CTU to which a quad tree partition structure, a binary tree partition structure, and a ternary tree partition structure are all applied.

As described above, in order to partition the CTU, at least one of a quad tree partition structure, a binary tree partition structure, and a ternary tree partition structure may be applied. Various tree partition structures may be sequentially applied to the CTU, according to a predetermined priority order. For example, the quad tree partition structure may be preferentially applied to the CTU. A coding unit that cannot be partitioned any longer using a quad tree partition structure may correspond to a leaf node of a quad tree. A coding unit corresponding to a leaf node of a quad tree may serve as a root node of a binary and/or ternary tree partition structure. That is, a coding unit corresponding to a leaf node of a quad tree may be further partitioned by a binary tree partition structure or a ternary tree partition structure, or may not be further partitioned. Therefore, by preventing a coding unit that results from binary tree partitioning or ternary tree partitioning of a coding unit corresponding to a leaf node of a quad tree from undergoing further quad tree partitioning, block partitioning and/or signaling of partition information can be effectively performed.

The fact that a coding unit corresponding to a node of a quad tree is partitioned may be signaled using quad partition information. The quad partition information having a first value (e.g., "1") may indicate that a current coding unit is partitioned by the quad tree partition structure. The quad partition information having a second value (e.g., "0") may indicate that a current coding unit is not partitioned by the quad tree partition structure. The quad partition information may be a flag having a predetermined length (e.g., one bit).

There may not be a priority between the binary tree partitioning and the ternary tree partitioning. That is, a coding unit corresponding to a leaf node of a quad tree may further undergo arbitrary partitioning among the binary tree partitioning and the ternary tree partitioning. In addition, a coding unit generated through the binary tree partitioning or the ternary tree partitioning may undergo a further binary tree partitioning or a further ternary tree partitioning, or may not be further partitioned.

A tree structure in which there is no priority among the binary tree partitioning and the ternary tree partitioning is referred to as a multi-type tree structure. A coding unit corresponding to a leaf node of a quad tree may serve as a root node of a multi-type tree. Whether to partition a coding unit which corresponds to a node of a multi-type tree may be signaled using at least one of multi-type tree partition indication information, partition direction information, and partition tree information. For partitioning of a coding unit corresponding to a node of a multi-type tree, the multi-type tree partition indication information, the partition direction, and the partition tree information may be sequentially signaled.

The multi-type tree partition indication information having a first value (e.g., "1") may indicate that a current coding unit is to undergo a multi-type tree partitioning. The multi-type tree partition indication information having a second value (e.g., "0") may indicate that a current coding unit is not to undergo a multi-type tree partitioning.

When a coding unit corresponding to a node of a multi-type tree is further partitioned by a multi-type tree partition structure, the coding unit may include partition direction information. The partition direction information may indicate in which direction a current coding unit is to be partitioned for the multi-type tree partitioning. The partition direction information having a first value (e.g., "1") may indicate that a current coding unit is to be vertically partitioned. The partition direction information having a second value (e.g., "0") may indicate that a current coding unit is to be horizontally partitioned.

When a coding unit corresponding to a node of a multi-type tree is further partitioned by a multi-type tree partition structure, the current coding unit may include partition tree information. The partition tree information may indicate a tree partition structure which is to be used for partitioning of a node of a multi-type tree. The partition tree information having a first value (e.g., "1") may indicate that a current coding unit is to be partitioned by a binary tree partition structure. The partition tree information having a second value (e.g., "0") may indicate that a current coding unit is to be partitioned by a ternary tree partition structure.

The partition indication information, the partition tree information, and the partition direction information may each be a flag having a predetermined length (e.g., one bit).

At least any one of the quadtree partition indication information, the multi-type tree partition indication information, the partition direction information, and the partition tree information may be entropy encoded/decoded. For the entropy-encoding/decoding of those types of information, information on a neighboring coding unit adjacent to the current coding unit may be used. For example, there is a high probability that the partition type (the partitioned or non-partitioned, the partition tree, and/or the partition direction) of a left neighboring coding unit and/or an upper neighboring coding unit of a current coding unit is similar to that of the current coding unit. Therefore, context information for entropy encoding/decoding of the information on the current coding unit may be derived from the information on the neighboring coding units. The information on the neighboring coding units may include at least any one of quad partition information, multi-type tree partition indication information, partition direction information, and partition tree information.

As another example, among binary tree partitioning and ternary tree partitioning, binary tree partitioning may be preferentially performed. That is, a current coding unit may primarily undergo binary tree partitioning, and then a coding unit corresponding to a leaf node of a binary tree may be set as a root node for ternary tree partitioning. In this case, neither quad tree partitioning nor binary tree partitioning may not be performed on the coding unit corresponding to a node of a ternary tree.

A coding unit that cannot be partitioned by a quad tree partition structure, a binary tree partition structure, and/or a ternary tree partition structure becomes a basic unit for coding, prediction and/or transformation. That is, the coding unit cannot be further partitioned for prediction and/or transformation. Therefore, the partition structure information and the partition information used for partitioning a coding unit into prediction units and/or transformation units may not be present in a bit stream.

However, when the size of a coding unit (i.e., a basic unit for partitioning) is larger than the size of a maximum transformation block, the coding unit may be recursively partitioned until the size of the coding unit is reduced to be equal to or smaller than the size of the maximum transformation block. For example, when the size of a coding unit is 64x64 and when the size of a maximum transformation block is 32x32, the coding unit may be partitioned into four 32x32 blocks for transformation. For example, when the size of a coding unit is 32x64 and the size of a maximum transformation block is 32x32, the coding unit may be partitioned into two 32x32 blocks for the transformation. In this case, the partitioning of the coding unit for transformation is not signaled separately, and may be determined through comparison between the horizontal or vertical size of the coding unit and the horizontal or vertical size of the maximum transformation block. For example, when the horizontal size (width) of the coding unit is larger than the horizontal size (width) of the maximum transformation block, the coding unit may be vertically bisected. For example, when the vertical size (height) of the coding unit is larger than the vertical size (height) of the maximum transformation block, the coding unit may be horizontally bisected.

Information of the maximum and/or minimum size of the coding unit and information of the maximum and/or minimum size of the transformation block may be signaled or determined at an upper level of the coding unit. The upper level may be, for example, a sequence level, a picture level, a slice level, a tile group level, a tile level, or the like. For example, the minimum size of the coding unit may be determined to be 4x4. For example, the maximum size of the transformation block may be determined to be 64x64. For example, the minimum size of the transformation block may be determined to be 4x4.

Information of the minimum size (quad tree minimum size) of a coding unit corresponding to a leaf node of a quad tree and/or information of the maximum depth (the maximum tree depth of a multi-type tree) from a root node to a leaf node of the multi-type tree may be signaled or determined at an upper level of the coding unit. For example, the upper level may be a sequence level, a picture level, a slice level, a tile group level, a tile level, or the like. Information of the minimum size of a quad tree and/or information of the maximum depth of a multi-type tree may be signaled or determined for each of an intra-picture slice and an inter-picture slice.

Difference information between the size of a CTU and the maximum size of a transformation block may be signaled or determined at an upper level of the coding unit. For example, the upper level may be a sequence level, a picture level, a slice level, a tile group level, a tile level, or the like. Information of the maximum size of the coding units corresponding to the respective nodes of a binary tree (hereinafter, referred to as a maximum size of a binary tree) may be determined based on the size of the coding tree unit and the difference information. The maximum size of the coding units corresponding to the respective nodes of a ternary tree (hereinafter, referred to as a maximum size of a ternary tree) may vary depending on the type of slice. For example, for an intra-picture slice, the maximum size of a ternary tree may be 32x32. For example, for an inter-picture slice, the maximum size of a ternary tree may be 128x128. For example, the minimum size of the coding units corresponding to the respective nodes of a binary tree (hereinafter, referred to as a minimum size of a binary tree) and/or the minimum size of the coding units corresponding to the respective nodes of a ternary tree (hereinafter, referred to as a minimum size of a ternary tree) may be set as the minimum size of a coding block.

As another example, the maximum size of a binary tree and/or the maximum size of a ternary tree may be signaled or determined at the slice level. Alternatively, the minimum size of the binary tree and/or the minimum size of the ternary tree may be signaled or determined at the slice level.

Depending on size and depth information of the above-described various blocks, quad partition information, multi-type tree partition indication information, partition tree information and/or partition direction information may be included or may not be included in a bit stream.

For example, when the size of the coding unit is not larger than the minimum size of a quad tree, the coding unit does not contain quad partition information. The quad partition information may be inferred to be a second value.

For example, when the sizes (horizontal and vertical sizes) of a coding unit corresponding to a node of a multi-type tree are larger than the maximum sizes (horizontal and vertical sizes) of a binary tree and/or the maximum sizes (horizontal and vertical sizes) of a ternary tree, the coding unit may not be binary-partitioned or ternary-partitioned. Accordingly, the multi-type tree partition indication information may not be signaled but may be inferred to be a second value.

Alternatively, when the sizes (horizontal and vertical sizes) of a coding unit corresponding to a node of a multi-type tree are the same as the maximum sizes (horizontal and vertical sizes) of a binary tree and/or are two times as large as the maximum sizes (horizontal and vertical sizes) of a ternary tree, the coding unit may not be further binary-partitioned or ternary-partitioned. Accordingly, the multi-type tree partition indication information may not be signaled but be derived from a second value. This is because when a coding unit is partitioned by a binary tree partition structure and/or a ternary tree partition structure, a coding unit smaller than the minimum size of a binary tree and/or the minimum size of a ternary tree is generated.

Alternatively, the binary tree partitioning or the ternary tree partitioning may be limited on the basis of the size of a virtual pipeline data unit (hereinafter, a pipeline buffer size). For example, when the coding unit is divided into sub-coding units which do not fit the pipeline buffer size by the binary tree partitioning or the ternary tree partitioning, the corresponding binary tree partitioning or ternary tree partitioning may be limited. The pipeline buffer size may be the size of the maximum transform block (e.g., 64X64). For example, when the pipeline buffer size is 64X64, the division below may be limited.

- NxM (N and/or M is 128) Ternary tree partitioning for coding units
- 128xN (N <= 64) Binary tree partitioning in horizontal direction for coding units
- $N \times 128$ (N <= 64) Binary tree partitioning in vertical direction for coding units

Alternatively, when the depth of a coding unit corresponding to a node of a multi-type tree is equal to the maximum depth of the multi-type tree, the coding unit may not be further binary-partitioned and/or ternary-partitioned. Accordingly, the multi-type tree partition indication information may not be signaled but may be inferred to be a second value.

Alternatively, only when at least one of vertical direction binary tree partitioning, horizontal direction binary tree partitioning, vertical direction ternary tree partitioning, and horizontal direction ternary tree partitioning is possible for a coding unit corresponding to a node of a multi-type tree, the multi-type tree partition indication information may be signaled. Otherwise, the coding unit may not be binary-partitioned and/or ternary-partitioned. Accordingly, the multi-type tree partition indication information may not be signaled but may be inferred to be a second value.

Alternatively, only when both of the vertical direction binary tree partitioning and the horizontal direction binary tree partitioning or both of the vertical direction ternary tree partitioning and the horizontal direction ternary tree partitioning are possible for a coding unit corresponding to a node of a multi-type tree, the partition direction information may be signaled. Otherwise, the partition direction information may not be signaled but may be derived from a value indicating possible partitioning directions.

Alternatively, only when both of the vertical direction binary tree partitioning and the vertical direction ternary tree partitioning or both of the horizontal direction binary tree partitioning and the horizontal direction ternary tree partitioning are possible for a coding tree corresponding to a node of a multi-type tree, the partition tree information may be signaled. Otherwise, the partition tree information may not be signaled but be inferred to be a value indicating a possible partitioning tree structure.

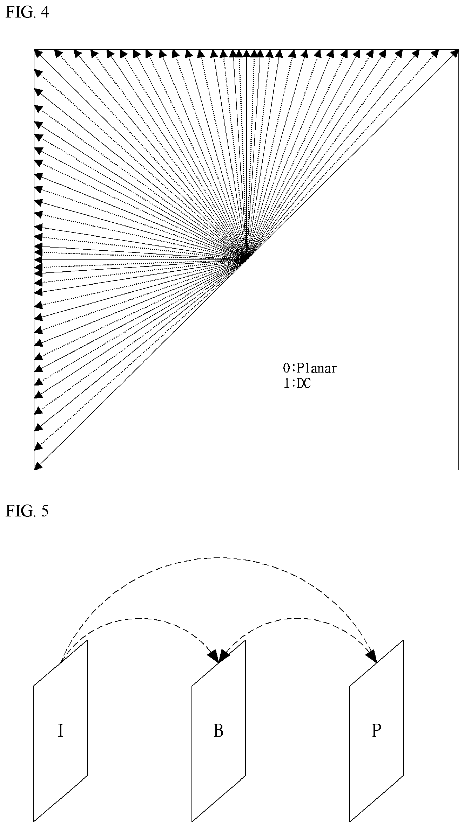

FIG. 4 is a view showing an intra-prediction process.

Arrows from center to outside in FIG. 4 may represent prediction directions of intra prediction modes.

Intra encoding and/or decoding may be performed by using a reference sample of a neighbor block of the current block. A neighbor block may be a reconstructed neighbor block. For example, intra encoding and/or decoding may be performed by using a coding parameter or a value of a reference sample included in a reconstructed neighbor block.

A prediction block may mean a block generated by performing intra prediction. A prediction block may correspond to at least one among CU, PU and TU. A unit of a prediction block may have a size of one among CU, PU and TU. A prediction block may be a square block having a size of 2x2, 4x4, 16x16, 32x32 or 64x64 etc. or may be a rectangular block having a size of $2 \times 8$, 4x8, 2x16, 4x16 and 8x16 etc.

Intra prediction may be performed according to intra prediction mode for the current block. The number of intra prediction modes which the current block may have may be a fixed value and may be a value determined differently according to an attribute of a prediction block. For example, an attribute of a prediction block may comprise a size of a prediction block and a shape of a prediction block, etc.

The number of intra-prediction modes may be fixed to N regardless of a block size. Or, the number of intra prediction modes may be 3, 5, 9, 17, 34, 35, 36, 65, or 67 etc. Alternatively, the number of intra-prediction modes may vary according to a block size or a color component type or both. For example, the number of intra prediction modes may vary according to whether the color component is a luma signal or a chroma signal. For example, as a block size becomes large, a number of intra-prediction modes may increase. Alternatively, a number of intra-prediction modes of a luma component block may be larger than a number of intra-prediction modes of a chroma component block.

An intra-prediction mode may be a non-angular mode or an angular mode. The non-angular mode may be a DC mode or a planar mode, and the angular mode may be a prediction mode having a specific direction or angle. The intra-prediction mode may be expressed by at least one of a mode number, a mode value, a mode numeral, a mode angle, and mode direction. A number of intra-prediction modes may be M, which is larger than 1, including the non-angular and the angular mode. In order to intra-predict a current block, a step of determining whether or not samples included in a reconstructed neighbor block may be used as reference samples of the current block may be performed. When a sample that is not usable as a reference sample of the current block is present, a value obtained by duplicating or performing interpolation on at least one sample value among samples included in the reconstructed neighbor block or both may be used to replace with a non-usable sample value of a sample, thus the replaced sample value is used as a reference sample of the current block.

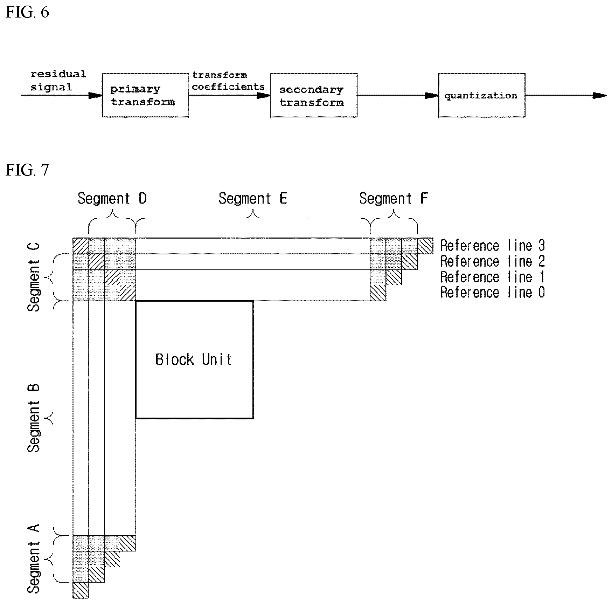

FIG. 7 is a diagram illustrating reference samples capable of being used for intra prediction.

As shown in FIG. 7, at least one of the reference sample line 0 to the reference sample line 3 may be used for intra prediction of the current block. In FIG. 7, the samples of a segment A and a segment F may be padded with the samples closest to a segment B and a segment E, respectively, instead of retrieving from the reconstructed neighboring block. Index information indicating the reference sample line to be used for intra prediction of the current block may be signaled. For example, in FIG. 7, reference sample line indicators 0, 1, and 2 may be signaled as index information indicating reference sample lines 0, 1 and 2. When the upper boundary of the current block is the boundary of the CTU, only the reference sample line 0 may be available. Therefore, in this case, the index information may not be signaled. When a reference sample line other than the reference sample line 0 is used, filtering for a prediction block, which will be described later, may not be performed.

When intra-predicting, a filter may be applied to at least one of a reference sample and a prediction sample based on an intra-prediction mode and a current block size.

In case of a planar mode, when generating a prediction block of a current block, according to a position of a prediction target sample within a prediction block, a sample value of the prediction target sample may be generated by using a weighted sum of an upper and left side reference sample of a current block, and a right upper side and left lower side reference sample of the current block. In addition, in case of a DC mode, when generating a prediction block of a current block, an average value of upper side and left side reference samples of the current block may be used. In addition, in case of an angular mode, a prediction block may be generated by using an upper side, a left side, a right upper side, and/or a left lower side reference sample of the current block. In order to generate a prediction sample value, interpolation of a real number unit may be performed.

In the case of intra prediction between color components, a prediction block for the current block of the second color component may be generated on the basis of the corresponding reconstructed block of the first color component. For example, the first color component may be a luma component, and the second color component may be a chroma component. For intra prediction between color components, the parameters of the linear model between the first color component and the second color component may be derived on the basis of the template. The template may include upper and/or left neighboring samples of the current block and upper and/or left neighboring samples of the reconstructed block of the first color component corresponding thereto. For example, the parameters of the linear model may be derived using a sample value of a first color component having a maximum value among samples in a template and a sample value of a second color component corresponding thereto, and a sample value of a first color component having a minimum value among samples in the template and a sample value of a second color component corresponding thereto. When the parameters of the linear model are derived, a corresponding reconstructed block may be applied to the linear model to generate a prediction block for the current block. According to a video format, subsampling may be performed on the neighboring samples of the reconstructed block of the first color component and the corresponding reconstructed block. For example, when one sample of the second color component corresponds to four samples of the first color component, four samples of the first color component may be sub-sampled to compute one corresponding sample. In this case, the parameter derivation of the linear model and intra prediction between color components may be performed on the basis of the corresponding sub-sampled samples. Whether or not to perform intra prediction between color components and/or the range of the template may be signaled as the intra prediction mode.

The current block may be partitioned into two or four sub-blocks in the horizontal or vertical direction. The partitioned sub-blocks may be sequentially reconstructed. That is, the intra prediction may be performed on the sub-block to generate the sub-prediction block. In addition, dequantization and/or inverse transform may be performed on the sub-blocks to generate sub-residual blocks. A reconstructed sub-block may be generated by adding the sub-prediction block to the sub-residual block. The reconstructed sub-block may be used as a reference sample for intra prediction of the sub-sub-blocks. The sub-block may be a block including a predetermined number (for example, 16) or more samples. Accordingly, for example, when the current block is an 8×4 block or a 4×8 block, the current block may be partitioned into two sub-blocks. Also, when the current block is a 4x4 block, the current block may not be partitioned into sub-blocks. When the current block has other sizes, the current block may be partitioned into four sub-blocks. Information on whether or not to perform the intra prediction based on the sub-blocks and/or the partitioning direction (horizontal or vertical) may be signaled. The intra prediction based on the sub-blocks may be limited to be performed only when reference sample line 0 is used. When the intra prediction based on the sub-block is performed, filtering for the prediction block, which will be described later, may not be performed.

The final prediction block may be generated by performing filtering on the prediction block that is intra-predicted. The filtering may be performed by applying predetermined weights to the filtering target sample, the left reference sample, the upper reference sample, and/or the upper left reference sample. The weight and/or the reference sample (range, position, etc.) used for the filtering may be determined on the basis of at least one of a block size, an intra prediction mode, and a position of the filtering target sample in the prediction block. The filtering may be performed only in the case of a predetermined intra prediction mode (e.g., DC, planar, vertical, horizontal, diagonal, and/or adjacent diagonal modes). The adjacent diagonal mode may be a mode in which k is added to or subtracted from the diagonal mode. For example, k may be a positive integer of 8 or less.

An intra-prediction mode of a current block may be entropy encoded/decoded by predicting an intra-prediction mode of a block present adjacent to the current block. When intra-prediction modes of the current block and the neighbor block are identical, information that the intra-prediction modes of the current block and the neighbor block are identical may be signaled by using predetermined flag information. In addition, indicator information of an intra-prediction mode that is identical to the intra-prediction mode of the current block among intra-prediction modes of a plurality of neighbor blocks may be signaled. When intra-prediction modes of the current block and the neighbor block are different, intra-prediction mode information of the current block may be entropy encoded/decoded by performing entropy encoding/decoding based on the intra-prediction mode of the neighbor block.

FIG. 5 is a diagram illustrating an embodiment of an inter-picture prediction process.

In FIG. 5, a rectangle may represent a picture. In FIG. 5, an arrow represents a prediction direction. Pictures may be categorized into intra pictures (I pictures), predictive pictures (P pictures), and Bi-predictive pictures (B pictures) according to the encoding type thereof.

The I picture may be encoded through intra-prediction without requiring inter-picture prediction. The P picture may be encoded through inter-picture prediction by using a reference picture that is present in one direction (i.e., forward direction or backward direction) with respect to a current block. The B picture may be encoded through inter-picture prediction by using reference pictures that are preset in two directions (i.e., forward direction and backward direction) with respect to a current block. When the inter-picture prediction is used, the encoder may perform inter-picture prediction or motion compensation and the decoder may perform the corresponding motion compensation.

Hereinbelow, an embodiment of the inter-picture prediction will be described in detail.

The inter-picture prediction or motion compensation may be performed using a reference picture and motion information.

Motion information of a current block may be derived during inter-picture prediction by each of the encoding apparatus 100 and the decoding apparatus 200. The motion information of the current block may be derived by using motion information of a reconstructed neighboring block, motion information of a collocated block (also referred to as a col block or a co-located block), and/or a block adjacent to the co-located block. The co-located block may mean a block that is located spatially at the same position as the current block, within a previously reconstructed collocated picture (also referred to as a col picture or a co-located picture). The co-located picture may be one picture among one or more reference pictures included in a reference picture list.

The derivation method of the motion information may be different depending on the prediction mode of the current block. For example, a prediction mode applied for inter prediction includes an AMVP mode, a merge mode, a skip mode, a merge mode with a motion vector difference, a subblock merge mode, a geometric partitioning mode, an combined inter intra prediction mode, affine mode, and the like. Herein, the merge mode may be referred to as a motion merge mode.

For example, when the AMVP is used as the prediction mode, at least one of motion vectors of the reconstructed neighboring blocks, motion vectors of the co-located blocks, motion vectors of blocks adjacent to the co-located blocks, and a (0, 0) motion vector may be determined as motion vector candidates for the current block, and a motion vector candidate list is generated by using the emotion vector candidates. The motion vector candidate of the current block can be derived by using the generated motion vector candidate list. The motion information of the current block may be determined based on the derived motion vector candidate. The motion vectors of the collocated blocks or the motion vectors of the blocks adjacent to the collocated blocks may be referred to as temporal motion vector candidates, and the motion vectors of the reconstructed neighboring blocks may be referred to as spatial motion vector candidates.

The encoding apparatus 100 may calculate a motion vector difference (MVD) between the motion vector of the current block and the motion vector candidate and may perform entropy encoding on the motion vector difference (MVD). In addition, the encoding apparatus 100 may perform entropy encoding on a motion vector candidate index and generate a bitstream. The motion vector candidate index may indicate an optimum motion vector candidate among the motion vector candidates included in the motion vector candidate list. The decoding apparatus may perform entropy decoding on the motion vector candidate index included in the bitstream and may select a motion vector candidate of a decoding target block from among the motion vector candidates included in the motion vector candidate list by using the entropy-decoded motion vector candidate index. In addition, the decoding apparatus 200 may add the entropy-decoded MVD and the motion vector candidate extracted through the entropy decoding, thereby deriving the motion vector of the decoding target block.

Meanwhile, the coding apparatus 100 may perform entropy-coding on resolution information of the calculated MVD. The decoding apparatus 200 may adjust the resolution of the entropy-decoded MVD using the MVD resolution information.

Meanwhile, the coding apparatus 100 calculates a motion vector difference (MVD) between a motion vector and a motion vector candidate in the current block on the basis of an affine model, and performs entropy-coding on the MVD. The decoding apparatus 200 derives a motion vector on a per sub-block basis by deriving an affine control motion vector of a decoding target block through the sum of the entropy-decoded MVD and an affine control motion vector candidate.

The bitstream may include a reference picture index indicating a reference picture. The reference picture index may be entropy-encoded by the encoding apparatus 100 and then signaled as a bitstream to the decoding apparatus 200. The decoding apparatus 200 may generate a prediction block of the decoding target block based on the derived motion vector and the reference picture index information.

Another example of the method of deriving the motion information of the current may be the merge mode. The merge mode may mean a method of merging motion of a plurality of blocks. The merge mode may mean a mode of deriving the motion information of the current block from the motion information of the neighboring blocks. When the merge mode is applied, the merge candidate list may be generated using the motion information of the reconstructed neighboring blocks and/or the motion information of the collocated blocks. The motion information may include at least one of a motion vector, a reference picture index, and an inter-picture prediction indicator. The prediction indicator may indicate one-direction prediction (L0 prediction or L1 prediction) or two-direction predictions (L0 prediction and L1 prediction).

The merge candidate list may be a list of motion information stored. The motion information included in the merge candidate list may be at least one of motion information (spatial merge candidate) of a neighboring block adjacent to the current block, motion information (temporal merge candidate) of the collocated block of the current block in the reference picture, new motion information generated by a combination of the motion information exiting in the merge candidate list, motion information (history-based merge candidate) of the block that is encoded/decoded before the current block, and zero merge candidate.

The encoding apparatus 100 may generate a bitstream by performing entropy encoding on at least one of a merge flag and a merge index and may signal the bitstream to the decoding apparatus 200. The merge flag may be information indicating whether or not to perform the merge mode for each block, and the merge index may be information indicating that which neighboring block, among the neighboring blocks of the current block, is a merge target block. For example, the neighboring blocks of the current block may include a left neighboring block on the left of the current block, an upper neighboring block disposed above the current block, and a temporal neighboring block temporally adjacent to the current block.

Meanwhile, the coding apparatus 100 performs entropy-coding on the correction information for correcting the motion vector among the motion information of the merge candidate and signals the same to the decoding apparatus 200. The decoding apparatus 200 can correct the motion vector of the merge candidate selected by the merge index on the basis of the correction information. Here, the correction information may include at least one of information on whether or not to perform the correction, correction direction information, and correction size information. As described above, the prediction mode that corrects the motion vector of the merge candidate on the basis of the signaled correction information may be referred to as a merge mode having the motion vector difference.

The skip mode may be a mode in which the motion information of the neighboring block is applied to the current block as it is. When the skip mode is applied, the encoding apparatus 100 may perform entropy encoding on information of the fact that the motion information of which block is to be used as the motion information of the current block to generate a bit stream, and may signal the bitstream to the decoding apparatus 200. The encoding apparatus 100 may not signal a syntax element regarding at least any one of the motion vector difference information, the encoding block flag, and the transform coefficient level to the decoding apparatus 200.

The subblock merge mode may mean a mode that derives the motion information in units of sub-blocks of a coding block (CU). When the subblock merge mode is applied, a subblock merge candidate list may be generated using motion information (sub-block based temporal merge candidate) of the sub-block collocated to the current sub-block in the reference image and/or an affine control point motion vector merge candidate.

The geometric partitioning mode may mean a mode that derives motion information by partitioning the current block into the predefined directions, derives each prediction sample using each of the derived motion information, and derives the prediction sample of the current block by weighting each of the derived prediction samples.

The inter-intra combined prediction mode may mean a mode that derives a prediction sample of the current block by weighting a prediction sample generated by inter prediction and a prediction sample generated by intra prediction.

The decoding apparatus 200 may correct the derived motion information by itself. The decoding apparatus 200 may search the predetermined region on the basis of the reference block indicated by the derived motion information and derive the motion information having the minimum SAD as the corrected motion information.

The decoding apparatus 200 may compensate a prediction sample derived via inter prediction using an optical flow.

FIG. 6 is a diagram illustrating a transform and quantization process.

As illustrated in FIG. 6, a transform and/or quantization process is performed on a residual signal to generate a quantized level signal. The residual signal is a difference between an original block and a prediction block (i.e., an intra prediction block or an inter prediction block). The prediction block is a block generated through intra prediction or inter prediction. The transform may be a primary transform, a secondary transform, or both. The primary transform of the residual signal results in transform coefficients, and the secondary transform of the transform coefficients results in secondary transform coefficients.

At least one scheme selected from among various transform schemes which are preliminarily defined is used to perform the primary transform. For example, examples of the predefined transform schemes include discrete cosine transform (DCT), discrete sine transform (DST), and Karhunen-Loeve transform (KLT). The transform coefficients generated through the primary transform may undergo the secondary transform. The transform schemes used for the primary transform and/or the secondary transform may be determined according to coding parameters of the current block and/or neighboring blocks of the current block. Alternatively, transform information indicating the transform scheme may be signaled. The DCT-based transform may include, for example, DCT-2, DCT-8, and the like. The DST-based transform may include, for example, DST-7.

A quantized-level signal (quantization coefficients) may be generated by performing quantization on the residual signal or a result of performing the primary transform and/or the secondary transform. The quantized level signal may be scanned according to at least one of a diagonal up-right scan, a vertical scan, and a horizontal scan, depending on an intra prediction mode of a block or a block size/shape. For example, as the coefficients are scanned in a diagonal up-right scan, the coefficients in a block form change into a one-dimensional vector form. Aside from the diagonal up-right scan, the horizontal scan of horizontally scanning a two-dimensional block form of coefficients or the vertical scan of vertically scanning a two-dimensional block form of coefficients may be used depending on the intra prediction mode and/or the size of a transform block. The scanned quantized-level coefficients may be entropy-encoded to be inserted into a bitstream.

A decoder entropy-decodes the bitstream to obtain the quantized-level coefficients. The quantized-level coefficients may be arranged in a two-dimensional block form through inverse scanning. For the inverse scanning, at least one of a diagonal up-right scan, a vertical scan, and a horizontal scan may be used.

The quantized-level coefficients may then be dequantized, then be secondary-inverse-transformed as necessary, and finally be primary-inverse-transformed as necessary to generate a reconstructed residual signal.

Inverse mapping in a dynamic range may be performed for a luma component reconstructed through intra prediction or inter prediction before in-loop filtering. The dynamic range may be divided into 16 equal pieces and the mapping function for each piece may be signaled. The mapping function may be signaled at a slice level or a tile group level. An inverse mapping function for performing the inverse mapping may be derived on the basis of the mapping function. In-loop filtering, reference picture storage, and motion compensation are performed in an inverse mapped region, and a prediction block generated through inter prediction is converted into a mapped region via mapping using the mapping function, and then used for generating the reconstructed block. However, since the intra prediction is performed in the mapped region, the prediction block generated via the intra prediction may be used for generating the reconstructed block without mapping/inverse mapping.

When the current block is a residual block of a chroma component, the residual block may be converted into an inverse mapped region by performing scaling on the chroma component of the mapped region. The availability of the scaling may be signaled at the slice level or the tile group level. The scaling may be applied only when the mapping for the luma component is available and the division of the luma component and the division of the chroma component follow the same tree structure. The scaling may be performed on the basis of an average of sample values of a luma prediction block corresponding to the color difference block. In this case, when the current block uses inter prediction, the luma prediction block may mean a mapped luma prediction block. A value necessary for the scaling may be derived by referring to a lookup table using an index of a piece to which an average of sample values of a luma prediction block belongs. Finally, by scaling the residual block using the derived value, the residual block may be switched to the inverse mapped region. Then, chroma component block restoration, intra prediction, inter prediction, in-loop filtering, and reference picture storage may be performed in the inverse mapped area.

Information indicating whether the mapping/inverse mapping of the luma component and chroma component is available may be signaled through a set of sequence parameters.

The prediction block of the current block may be generated on the basis of a block vector indicating a displacement between the current block and the reference block in the current picture. In this way, a prediction mode for generating a prediction block with reference to the current picture is referred to as an intra block copy (IBC) mode. The IBC mode may be applied to MxN (M<=64, N<=64) coding units. The IBC mode may include a skip mode, a merge mode, an AMVP mode, and the like. In the case of a skip mode or a merge mode, a merge candidate list is constructed, and the merge index is signaled so that one merge candidate may be specified. The block vector of the specified merge candidate may be used as a block vector of the current block. The merge candidate list may include at least one of a spatial candidate, a history-based candidate, a candidate based on an average of two candidates, and a zero-merge candidate. In the case of an AMVP mode, the difference block vector may be signaled. In addition, the prediction block vector may be derived from the left neighboring block and the upper neighboring block of the current block. The index on which neighboring block to use may be signaled. The prediction block in the IBC mode is included in the current CTU or the left CTU and limited to a block in the already reconstructed area. For example, a value of the block vector may be limited such that the prediction block of the current block is positioned in an area of three $64\times64$ blocks preceding the $64\times64$ block to which the current block belongs in the coding/decoding order. By limiting the value of the block vector in this way, memory consumption and device complexity according to the IBC mode implementation may be reduced.

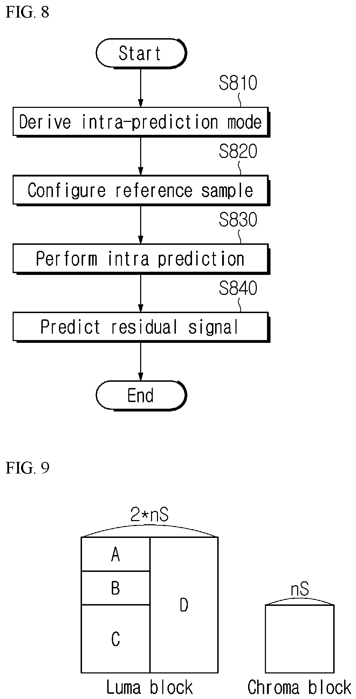

Hereinafter, embodiments of the present invention will be described with reference to FIG. 8 to FIG. 13.

FIG. 8 is a view for explaining an intra-prediction process according to an embodiment of the present invention.

Referring to FIG. 8, an intra-prediction process for a current block may include deriving an intra-prediction mode (S810), configuring a reference sample (S820), performing inter prediction (S830), and predicting a residual signal (S840). However, the process is not limited thereto, and an additional step required for intra prediction of a current block may be further included.

In deriving an intra-prediction mode according to an embodiment (S810), an intra-prediction mode of a current block may be derived. For example, an intra-prediction mode of a current block may be derived by using at least one of an intra-prediction mode of a neighboring block, entropy encoding/decoding of an intra-prediction mode of a current block from a bitstream, a coding parameter of a neighboring block, an intra-prediction mode of a color component, and prediction information of a residual signal. In addition, based on at least one of an intra-prediction mode of a current block and a size and shape of the current block, a first angular mode may be changed to a second angular mode.

In configuring a reference sample according to an embodiment (S820), a reference sample for intra prediction of a current block may be configured. For example, a reference sample may be configured by performing at least one of reference sample selection, reference sample padding and reference sample filtering.

In performing intra prediction according to an embodiment (S830), intra prediction for a current block may be performed. Intra prediction may be performed through at least one of non-angular prediction, angular prediction, location information-based prediction, and inter-color component prediction.

In addition, while intra prediction is performed, filtering may be performed for a prediction sample. For example, based on at least one of an intra-prediction mode of a current block, a horizontal size and a vertical size of the current block, a shape of the current block, and a location of a prediction sample, filtering may be performed for at least one prediction sample within the current block. Herein, a filter type, for example, at least one of a filter coefficient, a filter tap, and a filter shape may be different.

In predicting a residual signal according to an embodiment (S840), a residual signal of a current block may be predicted. For example, for a first residual signal of a current block, prediction may be performed in units of at least one of a sample line within a current block, a sample, and a predetermined group, and thus a second residual signal may be generated.

Hereinafter, deriving an intra-prediction mode (S810) will be described in detail according to an embodiment of the present invention. In the present specification, encoding/decoding may mean entropy encoding/decoding.

According to an embodiment, at least one reconstructed neighboring block may be used to derive an intra-prediction mode of a current block. Here, the position of the reconstructed neighboring block may be a fixed position that is predetermined or a position that is derived through encoding/decoding.

For example, when the size of a current block is WxH and the coordinate of an upper left corner sample of the current block is (0, 0), the neighboring block may be at least one among blocks adjacent to coordinates (-1, H-1), (W-1, -1), (W, -1), (-1, H) and (-1, -1) and neighboring blocks of the blocks. Here, W and H may indicate a horizontal length (= width) and a vertical length (= height) of the current block, respectively, or the number of samples within the current block.

According to an embodiment, in order to derive an intra-prediction mode of a current block, whether or not a neighboring block is available may be considered. When a neighboring block is located outside the boundary of at least one predetermined unit such as picture, slice, tile, and coding tree unit (CTU), is inter predicted, or is encoded by using a PCM mode, the neighboring block may be determined to be unavailable.

Here, an intra-prediction mode of an unavailable neighboring block may be replaced by a predetermined intra-prediction mode. Here, the predetermined intra-prediction mode may be a DC mode, a Planar mode, a vertical mode, a horizontal mode and/or a diagonal mode.

For example, when the neighboring block is an inter-predicted block and an indicator (for example, ciip flag) showing whether or not inter prediction and intra prediction are combined has a specific value (for example, '1'), the neighboring block may be derived into a Planar mode.

An intra-prediction mode of a current block may be derived as an intra-prediction mode of a neighboring block in a predetermined position or as a statistic value of intra-prediction modes of two or more neighboring blocks. In the present specification, a statistic value may mean at least one of an average value, a maximum value, a minimum value, a mode value, a median value, a weighted average value, and an interpolated value.

According to an embodiment, in order to derive an intra-prediction mode of a current block, whether or not an intra-prediction mode of a neighboring block is an angular mode may be considered. For example, when an intra-prediction mode of a neighboring block is a non-angular mode, the non-angular mode may be derived as an intra-prediction mode of a current block. For another example, when an intra-prediction mode of a neighboring block is a non-angular mode, an intra-prediction mode of a current block may be derived by using an intra-prediction mode of other neighboring block apart from the non-angular mode.

According to an embodiment, in order to derive an intra-prediction mode of a current block, whether or not an intra-prediction mode of a current block corresponds to a predetermined intra-prediction mode may be determined.

For example, when an intra-prediction mode of a current block is determined to correspond to a Planar mode, the intra-prediction mode of the current block may be derived as a Planar mode. Meanwhile, when an intra-prediction mode of a current block does not correspond to a Planar mode, a most probable mode (MPM) list may be configured, and the intra-prediction mode of the current block may be derived based on an MPM candidate indicator (for example, mpm_idx).

According to an embodiment, in order to derive an intra-prediction mode of a current block, one or more MPM lists may be configured by using an intra-prediction mode of a neighboring block. The number N of candidate modes included in an MPM list may have a fixed value or be determined according to the size and/or shape of a current block. In addition, an MPM list may be configured such that there is no overlapping mode.

Herein, when the number of available candidate modes is less than N, a predetermined candidate mode among available candidate modes may be added to an MPM list. For example, a mode obtained by adjusting a predetermined offset to an angular mode may be added to an MPM list. Here, the predetermined offset may be a positive integer (for example, 1, 2, 3, 4, etc.). Alternatively, at least one of a horizontal mode, a vertical mode, a 45 degree mode, a 135 degree mode, a 225 degree mode, and a non-angular mode may be added to an MPM list.

Alternatively, when an MPM list is configured, a non-angular mode (for example, a DC mode, a Planar mode, etc.) may be always included. A non-angular mode may have a high probability of occurrence, since prediction is performed by using both top and left reference samples. Accordingly, as a DC mode and a Planar mode are always added to an MPM list, a bit overhead for signaling an intra-prediction mode may be reduced.

According to an embodiment, an intra-prediction mode of a different color component may be used to derive an intra-prediction mode of a current block.

For example, when a current block is a chroma block, an intra-prediction mode of a luma block corresponding to the chroma block may be used. Herein, there may be one or more corresponding luma blocks, and the number of corresponding luma blocks may be determined based on at least one of the size and shape of a chroma block and/or a coding parameter. Alternatively, a corresponding luma block may be determined based on at least one of the size and shape of a luma block and/or a coding parameter.

When an intra-prediction mode of the corresponding luma block is a matrix-based intra prediction (MIP) mode or an intra block copy (IBC) prediction mode, a predetermined intra-prediction mode may be derived as an intra-prediction mode of a chroma block. For example, when an intra-prediction mode of a luma block is an MIP mode, a Planar mode may be derived as an intra-prediction mode of a chroma block. Alternatively, when an intra-prediction mode of the luma block is an IBC prediction mode, a DC mode may be derived as an intra-prediction mode of a chroma block.

Herein, the matrix-based intra prediction (MIP) may be a prediction method of generating a prediction sample of a current block by multiplying a matrix that is predefined or previously transmitted for samples of a previously decoded neighboring block.

A luma block corresponding to a chroma block may include a multiplicity of partitions. All or some of multiple partitions may have different intra-prediction modes.

An intra-prediction mode of a chroma block may be derived based on all or some of multiple partitions within a corresponding luma block. Herein, some partitions may be selectively used through comparison of size, shape, depth and other information between a chroma block and a luma block (all or some of multiple partitions).

In addition, a partition at a position within a luma block corresponding to a predetermined position within a chroma block may be selectively used. In this case, a predetermined position may mean the position of a central sample or a corner sample (for example, a top-left sample) of a chroma block.

A method of deriving an intra-prediction mode between color components according to an embodiment of the present invention is not limited to using an intra-prediction mode of a corresponding luma block. For example, an intra-prediction mode of a chroma block may be derived by using at least one of an MPM list and an MPM candidate indicator (for example, mpm_idx) of a corresponding luma block. In addition, an intra-prediction mode of a chroma block may be derived by sharing at least one of an MPM list and an MPM candidate indicator of a corresponding luma block.

FIG. 9 is a view for explaining a relationship between a luma block and a chroma block.

Referring to FIG. 9, a ratio among color components may be 4:2:0, and a luma block corresponding to a chroma block may be at least one of A, B, C and D.

An intra-prediction mode of a chroma block may be derived by using an intra-prediction mode of the luma block A corresponding to the top-left position (0, 0) within the chroma block or an intra-prediction mode of the luma block D corresponding to the position of central sample (nS/2, nS/2) of the chroma block. Here, a predetermined position within a chroma block is not limited to (0.0) and (nS/2, nS/2) and may be the position of top-right, bottom-left and/or bottom-right sample within the chroma block.

A predetermined position within a chroma block may be determined based on the shape of the chroma block. For example, when the shape of a chroma block is square, a predetermined position within the chroma block may be the position of a central sample. In addition, when the shape of a chroma block is rectangular, a predetermined position within the chroma block may be the position of a top-left sample. Alternatively, in the above example, a predetermined position within a square chroma block and a predetermined position within a rectangular chroma block may be opposite to each other.

In addition, an intra-prediction mode of a chroma block may be derived by using a statistic value of one or more intra-prediction modes within a luma block corresponding to the size of the chroma block. Herein, a statistical value may be at least any one of an average value, a maximum value, a minimum value, a mode value, a median value, a weighted average value, and an interpolated value.

For example, referring to FIG. 9, a mode corresponding to the average of the intra-prediction modes of the luma blocks A and D or a mode corresponding to the average of the intra-prediction modes of the luma blocks A, B, C and D corresponding to the size of a chroma block may be derived as the intra-prediction mode of the chroma block.

When there is a multiplicity of intra-prediction modes of an available luma block, all or some of the intra-prediction modes may be selected. Here, all or some of the intra-prediction modes of a luma block may be selected based on a predetermined position within a chroma block or based on the size, shape and/or depth of a chroma block and/or a luma block. By using an intra-prediction mode of a luma block thus selected, an intra-prediction mode of a chroma block may be derived.

For example, the size of luma block A corresponding to the position (0, 0) of the top-left sample within a chroma block may be compared with the size of luma block D corresponding to the position (nS/2, nS/2) of the central sample within the chroma block. Thus, an intra-prediction mode of the chroma block may be derived by using an intra-prediction mode of the luma block D that is relatively large.

In addition, when the size of a chroma block is within a predetermined range, an intra-prediction mode of the chroma block may be derived by using an intra-prediction mode of a luma block corresponding to the position (0, 0) of the top-left sample within the chroma block.

Here, the predetermined range may be derived based on at least one piece of information among information signaled through a bitstream, information on the size of a chroma block and/or a luma block, information on the depth of a chroma block and/or a luma block, and information predefined in an encoder/decoder.

In addition, when the shape of a chroma block is rectangular, an intra-prediction mode of the chroma block may be derived by using an intra-prediction mode of a luma block corresponding to the position (nS/2, nS/2) of central sample within the chroma block.

In the above description concerning FIG. 9, deriving an intra-prediction mode of a chroma block by using an intra-prediction mode of a luma block may include a case where the intra-prediction mode of the luma block, as it stands, is used as the intra-prediction mode of the chroma block.

In addition, apart from the case where an intra-prediction mode of a luma block, as it stands, is used as an intra-prediction mode of a chroma block, a case may be included where an intra-prediction mode of a chroma block is derived by using information (for example, mpm_idx, MPL list, etc.) that is used to derive an intra-prediction mode of a luma block.

In addition, an intra-prediction mode of a luma block corresponding to a predetermined position within a chroma block may be used to derive an MPM list for the chroma block. Here, information (for example, mpm idx, etc.) for a chroma block may be encoded and signaled. An MPM list for a chroma block may be configured in a similar way to an MPM list for a luma block. Alternatively, an MPM candidate of a chroma block may include an intra-prediction mode of a neighboring chroma block or an intra-prediction mode of a corresponding luma block or both.

When an MPM list for a chroma block is configured, if an indicator (for example, MPM flag) indicating whether or not an intra-prediction mode of a current block is included in the MPM list is "0", a second MPM list including one or more intra-prediction modes may be configured. In addition, a second MPM candidate indicator (for example, 2nd_mpm_idx) may be used to derive an intra-prediction mode of a current block. Herein, a second MPM indicator (for example, 2nd MPM flag) indicating whether or not an intra-prediction mode of a current block is included in a second MPM list may be encoded/decoded. Similarly to a first MPM list, a second MPM list may be configured by using the intra-prediction modes of a neighboring block. Herein, an intra-prediction mode included in a first MPM list may not be included in a second MPM list. The number of MPM lists used for deriving an intra-prediction mode of a current block is not limited to 1 or 2, but N MPM lists may be used (Here, N is a positive integer).

For another example, two MPM lists may be configured, and information (for example, MPM flag) indicating whether or not an intra-prediction mode of a current block is included in the two MPM lists may be signaled. When an intra-prediction mode of a current block is included in at least one of two MPM lists, a first MPM indicator (for example, first_mpm_flag) indicating whether or not the intra-prediction mode of the current block is included in a first MPM list may be signaled.

For example, when first mpm flag has a first value (for example, 1), it may mean that an intra-prediction mode of a current block is included in a first MPM list. When first mpm flag has a first value, based on index information regarding a first MPM list, an intra-prediction mode of a current block may be determined as one of the MPM candidates included in the first MPM list. Herein, when a first MPM list includes only one MPM candidate, separate index information may not be signaled. In this case, when first_mpm_flag has a first value, an intra-prediction mode of a current block may be determined as the one MPM candidate included in the first MPM list.

For example, when first mpm flag has a second value (for example, 0), it may mean that an intra-prediction mode of a current block is not included in a first MPM list. When first mpm flag has a second value, an intra-prediction mode of a current block may be determined to be included in a second MPM list. Accordingly, in this case, index information indicating one of the modes included in the second MPM list may be signaled. An intra-prediction mode of a current block may be determined as one MPM candidate specified by the index information among MPM candidates included in a second MPM list.

When an intra-prediction mode of a current block is not included in one of multiple MPM lists, an intra-prediction mode of a luma component of a current block may be encoded/decoded. In addition, an intra-prediction mode of a chroma component may be encoded/decoded or derived based on an intra-prediction mode of a corresponding luma component.

When a current block is partitioned into a multiplicity of sub blocks, intra-prediction modes for each sub block may be derived based on at least one of the above-described methods. Alternatively, as described above, an intra-prediction mode derived for a current block may be uniformly used for each of sub blocks.

The size and/or shape of a sub block may be a predetermined size (for example, 4x4) and/or shape. Alternatively, the size and/or shape of a sub block may be determined based on the size and/or shape of a current block.

In addition, the size of a sub block may be determined based on whether or not a neighboring block of a current block is partitioned or based on an intra-prediction mode of a neighboring block of a current block. For example, the size of a sub block may be determined by partitioning a current block based on a boundary where neighboring blocks have different intra-prediction modes. Alternatively, the size of a sub block may be determined as a current block is partitioned based on whether a neighboring block is an intra-predicted coding block or an inter-predicted coding block.

According to an embodiment, an indicator (for example, NDIP flag) showing that an intra-prediction mode of a current block is derived by using an intra-prediction mode of a neighboring block may be encoded/decoded. Here, the indicator may be encoded/decoded in every unit of at least one of a current block and a sub block. Alternatively, the indicator may be encoded/decoded only when a size of a current block or a sub block is a predetermined size or is within a predetermined range.

Whether or not the size of a current block is a predetermined size may be determined based on the horizontal length or vertical length of the current block. For example, when a horizontal length or a vertical length is a length capable of being partitioned, the size of a current block may be determined to be a predetermined size.

When a current block is partitioned into a multiplicity of sub blocks, intra-prediction modes of the multiplicity of sub blocks may be derived in a zigzag order or in parallel. An intra-prediction mode of a sub block may be derived through at least one method of deriving an intra-prediction mode of a current block. Herein, a neighboring block of a current block may be used as a neighboring block of each sub block. In addition, a sub block within a current block may be used as a neighboring block of each sub block.

An intra-prediction mode of a sub block within a current block may be derived by using an intra-prediction mode of the current block and an average value of the intra-prediction modes of blocks adjacent to the left and top of a sample at the position (0, 0) of each sub block. For example, when an intra-prediction mode of a current block is larger than an average value of the intra-prediction modes of blocks adjacent to the left and top of a sample at the position (0, 0) of each sub block, the derived intra-prediction mode may decrease by one-half of the average value. Otherwise, that is, an intra-prediction mode of a current block is equal to or smaller than an average value of the intra-prediction modes of blocks adjacent to the left and top of a sample at the position (0, 0) of each sub block, the derived intra-prediction mode may increase.

Information on intra prediction may be signaled through at least one of a video parameter set (VPS), a sequence parameter set (SPS), a picture parameter set (PPS), an adaptation parameter set (APS), a slice header, and a tile header. Here, for a predetermined block size or below, at least one piece of information on intra prediction may not be signaled. When at least one piece of information on intra prediction is not signaled, information on the intra prediction of a block (for example, an upper block), which is encoded/decoded before a current block is encoded/decoded, may be used.

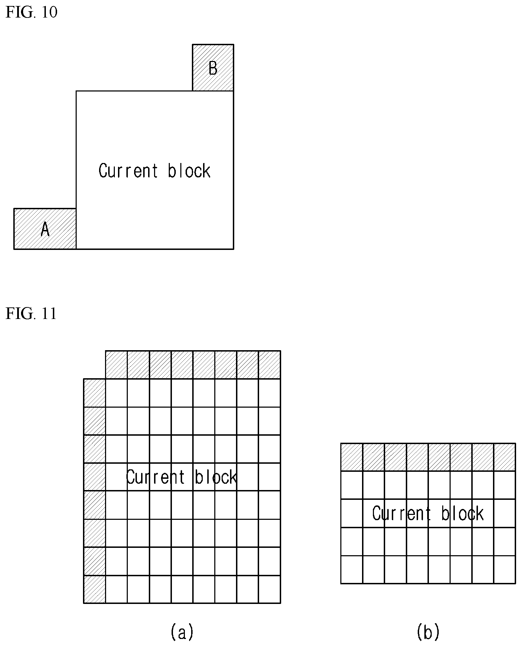

FIG. 10 is a view for explaining an intra-prediction mode of a neighboring block that is used to derive an intra-prediction mode of a current block, according to an embodiment of the present invention.

When an intra-prediction mode of a current block is derived, an MPM candidate may be derived by using an intra-prediction mode of a neighboring block.

For example, referring to FIG. 10, an MPM candidate may be derived by using the intra-prediction mode A of a neighboring block adjacent to the left of a current block and the intra-prediction mode B of a neighboring block adjacent to the top of a current block. Here, an MPM candidate may be derived by using a statistic value of A and B (for example, at least any one of an average value, a maximum value, a minimum value, a mode value, a median value, a weighted average value, and an interpolated value).

In addition, an MPM candidate may be derived by adding or subtracting a predetermined offset (for example, 1, 2, 3, ...) to or from A, B or a statistic value of A and B.

In addition, an MPM candidate may be derived by applying modular calculation (%) and/or an offset to A, B or a statistic value of A and B.

When an intra-prediction mode of a current block is derived, an MPM or an intra-prediction mode may be derived based on at least one of a reference sample line indicator (for example, intra_luma_ref_idx), a block partition indicator (for example, intra subblock flag, intra_subpartitions_mode_flag, etc.), a block partition direction indicator (for example, intra_subblock_type_flag, intra subpartitions split flag, etc.), a matrix-based intra prediction (MIP) indicator (for example, intra mip flag), and an indicator showing whether or not inter prediction and intra prediction are combined (for example, ciip flag).

The reference sample line indicator indicates one of multiple reference sample lines available for intra prediction and may have a value among 0, 1 and 2.

The block partition indicator may indicate whether or not a current block is predicted by being partitioned into sub blocks. For example, when a block partition indicator has a particular value (for example, "1"), a current block may be set to be predicted by being partitioned into sub blocks.

When a current block is predicted by being partitioned into sub blocks, the block partition direction indicator may indicate a partition direction. For example, when a block partition direction indicator has a value of 0, a current block may be set to be horizontally partitioned. On the other hand, when the block partition direction indicator has a value of 1, the current block may be set to be vertically partitioned. Alternatively, as a variant example, when a block partition direction indicator has a value of 0, a current block may not be partitioned into sub blocks. When the block partitioned direction indicator has a value of 1, the current block may be set to be predicted by being horizontally partitioned. When the block partitioned direction indicator has a value of 2, the current block may be set to be predicted by being vertically partitioned.

The MIP indicator may indicate whether or not matrix-based intra prediction is performed on a current block. For example, when an MIP indicator has a particular value (for example, "1"), it may be set that MIP is performed on a current block. In other words, an intra-prediction mode of a current block may be set as an MIP mode.

Herein, depending on whether or not MIP is performed, an intra-prediction mode may be differently derived.

For example, depending on whether or not MIP is performed, an intra-prediction mode may be derived by changing the number of MPMs. For example, when matrix-based intra prediction is performed, three MPMs may be configured. When no matrix-based intra prediction is performed, five MPMs may be configured. In other words, when matrix-based intra prediction is performed, a smaller number of MPMs may be used than otherwise, that is, when no matrix-based intra prediction is performed.

For another example, depending on whether or not matrix-based intra prediction is performed, the number of intra prediction modes may be differently set. For example, when matrix-based intra prediction is performed, the number of intra-prediction modes may be differently set according to the size of a current block. For example, as the size of a current block is larger, a larger number of intra-prediction modes may be used. Alternatively, as the size of a current block is smaller, a larger number of intra-prediction modes may be used. Alternatively, when matrix-based intra prediction is not performed, the number of intra prediction modes may be fixed, irrespective of the size of a current block.

For another example, depending on whether or not matrix-based intra prediction is performed, different methods may be used to derive an intra-prediction mode of a neighboring block. For example, when matrix-based intra prediction is performed, an intra-prediction mode of a neighboring block may be changed to a predetermined intra-prediction mode and then be derived, based on the size of a current block and the size of the neighboring block. Alternatively, when matrix-based intra prediction is not performed, an intra-prediction mode of a neighboring block may not be changed.

For example, when matrix-based intra prediction is performed for a neighboring block, an intra-prediction mode of a neighboring block may be derived as a predetermined intra-prediction mode (for example, Planar mode). Specifically, when an MIP indicator (for example, intra_mip_flag) for a neighboring block has a particular value (for example, 1), that is, when matrix-based intra prediction is performed for a neighboring block, an intra-prediction mode of the neighboring block may be derived as a predetermined intra-prediction mode (for example, Planar mode).

Here, the neighboring block may mean a block adjacent to the bottom left of a current block or to the top right of the current block.

According to an embodiment, whether or not an intra-prediction mode of a current block is a predetermined prediction mode may be determined based on a reference sample line indicator. For example, the predetermined prediction mode may be a Planar mode.

For example, when a reference sample line indicator has a particular value (for example, 0) and an intra-prediction mode of a current block is determined as a Planar mode, the intra-prediction mode of the current block may be derived as a Planar mode. Meanwhile, when an intra-prediction mode of a current block is determined not as a Planar mode, an MPM list may be configured, and the intra-prediction mode of the current block may be derived based on an MPM candidate indicator. In the above example, whether or not an intra-prediction mode of a current block is a Planar mode may be determined based on separate information indicating whether or not the intra-prediction mode of the current block is a Planar mode. The separate information may be signaled only when a reference sample line indicator has a particular value (for example, 0).

In addition, when a reference sample line indicator does not have a particular value (for example, 0), determining whether or not an intra-prediction mode of a current block is the predetermined prediction mode may be skipped. In other words, when a reference sample line indicator has a different value from 0, an MPM list may be configured and an intra-prediction mode of a current block may be derived based on an MPM candidate indicator, without determination on whether or not the intra-prediction mode of the current block is the predetermined prediction mode. For example, when a reference sample line indicator does not have a particular value (for example, 0), separate information indicating whether or not an intra-prediction mode of a current block is a Planar mode may not be signaled.

According to an embodiment, an MPM list for a current block may be configured, irrespective of a reference sample line indicator (for example, intra_luma_ref_idx) and sub-block partition prediction information (for example, intra_subblock_flag, intra_subpartitions_mode flag, intra_subblock_type_flag, intra subpartitions split flag, etc.).

For example, referring to FIG. 10, an MPM list for a current block may be configured based on the intra-prediction mode A of a neighboring block adjacent to the left of the current block and the intra-prediction mode B of a neighboring block adjacent to the top of the current block.

When A and B are the same mode and an angular mode (for example, a mode greater than 1), an MPM list may be configured which includes five MPM candidates in the order of A, 2+((A+61)%64), 2+((A-1)%64), DC, and 2+((A+60)%64).

For another example, when A and B are different modes and both are angular modes, three MPM candidates may be preferentially included in an MPM list in the order of A, B and DC. In addition, the larger mode of A and B and the smaller mode of A and B may be determined as maxAB and minAB respectively. Herein, when a difference between maxAB and minAB is greater than 1 but less than 63, two MPM candidates may be added in the order of 2+((maxAB+61)%64) and 2+((maxAB-1)%64, and thus, an MPM list including a total of five MPM candidates may be configured. Alternatively, when the difference between maxAB and minAB is 1 or equal to or greater than 63, two MPM candidates may be added in the order of 2+((maxAB+60)%64) and 2+((maxAB)%64), and thus, an MPM list including a total of five MPM candidates may be configured.

For another example, when A and B are different modes, one is an angular mode and the other is a non-angular mode, an MPM list including five MPM candidates in the order of maxAB, DC, 2+((maxAB+61)%64), 2+((maxAB-1)%64, and 2+((maxAB+60)%64) may be configured.

In other cases than the above-described cases, for example, when A and B are the same and a non-angular mode (for example, a mode that is equal to or less than 1), or when A and B are different but both are non-angular modes, an MPM list including five MPM candidates in the order of DC, 50, 18, 46 and 54 may be configured.

In addition, when the combined inter and intra prediction for a current block is performed, an MPM is not derived and intra prediction for the current block may be performed by using a Planar mode.

For example, when a combined inter and intra prediction indicator (for example, ciip_flag) is 1 (or true), an intra-prediction mode of a current block may be determined as a Planar mode.

According to an embodiment, when an intra-prediction mode of a current block is derived, residual signal prediction information may be used. Residual signal prediction information may include residual signal prediction application information and/or residual signal prediction direction information. Residual signal prediction application information may be information indicating whether or not residual signal prediction is applied for a current block. Residual signal prediction direction information may be information indicating a prediction direction of a residual signal, when residual signal prediction is applied for a current block. A prediction direction of a residual signal may be determined as one of a horizontal direction and a vertical direction. Residual signal prediction direction information may be signaled when residual signal prediction application information indicates that residual signal prediction is applied for a current block. When residual signal prediction is applied for a current block, an intra-prediction mode of the current block may be derived based on residual signal prediction direction information. For example, when a residual signal prediction direction is a horizontal direction, an intra-prediction mode of a current block may be derived as a horizontal mode. Alternatively, when a residual signal prediction direction is a vertical direction, an intra-prediction mode of a current block may be derived as a vertical mode.

Here, the residual signal prediction information may be described as a block differential pulse coded modulation (BDPCM) direction indicator (for example, intra_bdpcm_luma_dir_flag). In other words, a BDPCM direction indicator may indicate a prediction direction, when residual signal prediction is performed. For example, when a BDPCM direction indicator has a first value (for example, 0), a residual signal prediction direction may be set as a horizontal direction. In addition, when a BDPCM direction indicator has a second value (for example, 1), a residual signal prediction direction may be set as a vertical direction.

When residual signal prediction is performed for the current block, a predetermined intra-prediction mode may be stored as an intra-prediction mode of the current block.

For example, a Planar mode may be stored as an intra-prediction mode of a current block.

Alternatively, a DC mode may be stored as an intra-prediction mode of a current block.

Alternatively, a predetermined mode included in an MPM list may be stored as an intra-prediction mode of a current block. For example, an intra-prediction mode existing in the first place of an MPM list may be stored as an intra-prediction mode of a current block.

Alternatively, an intra-prediction mode corresponding to the same direction as a prediction direction of a residual signal may be stored as an intra-prediction mode of a current block. For example, when the residual signal prediction is horizontally performed, 'Mode 18' corresponding to a horizontal mode may be stored as an intra-prediction mode of a current block. Meanwhile, when the residual signal prediction is vertically performed, 'Mode 50' corresponding to a vertical mode may be stored as an intra-prediction mode of a current block.

For example, when a BDPCM direction indicator (for example, intra_bdpcm_luma_dir_flag) has a first value (for example, 0), residual signal prediction may be performed in a horizontal direction. Accordingly, the horizontal direction (for example, 'Mode 18') that is the residual signal prediction direction may be stored as an intra-prediction mode of a current block.

In addition, when a BDPCM direction indicator (for example, intra_bdpcm_luma_dir_flag) has a second value (for example, 1), residual signal prediction may be performed in a vertical direction. Accordingly, the vertical direction (for example, 'Mode 50') that is the residual signal prediction direction may be stored as an intra-prediction mode of a current block.

When an intra-prediction mode of a current block is derived by using an MPM list, intra-prediction mode information may be signaled. The intra-prediction mode information may be at least one of an MPM indicator (for example, intra_luma_mpm_flag or MPM flag), an MPM candidate indicator (for example, mpm_idx or intra_luma_mpm_idx), a Planar mode indicator (for example, intra_luma_planar_flag), and/or a residual mode indicator (for example, intra luma mpm remainder).

An MPM indicator (for example, intra_luma_mpm_flag or MPM flag) may indicate whether or not there is a same mode as an intra-prediction mode of a current block in an MPM list. Here, when an MPM indicator has a first value (for example, 1), an MPM candidate indicator (for example, mpm_idx or intra_luma_mpm_idx) indicating which mode among candidate modes in an MPM list is the same mode as an intra-prediction mode of a current block may be signaled. Alternatively, on the contrary, when an MPM indicator has a second value (for example, 0), a residual mode indicator (for example, intra_luma_mpm_remainder) indicating an intra-prediction mode of a current block among modes except an MPM mode may be signaled.

A Planar mode indicator (for example, intra_luma_planar_flag) may indicate whether or not an intra-prediction mode of a current block is capable of being derived as a Planar mode. For example, when intra_luma_planar_flag has a first value (for example, 1), an intra-prediction mode of a current block may be derived as a Planar mode. Alternatively, when intra_luma_planar_flag has a second value (for example, 0), intra luma mpm idx may be signaled and an intra-prediction mode of a current block may be derived from an MPM list. The first value and the second value may be defined to the contrary.

Meanwhile, at least one of the pieces of intra prediction information may not be signaled based on at least one of reference sample line-related information (for example, intra_luma_ref_idx), sub-block partition prediction-related information (for example, intra_subblock_flag, intra subpartitions mode flag, intra_subblock_type_flag, intra subpartitions split flag, etc.), MIP-related information (for example, intra_mip_flag), and CIIP-related information (for example, ciip_flag).

For example, when intra_luma_ref_idx has a particular value (for example, 0), intra_luma_mpm_flag or intra_luma_mpm_remainder may not be signaled. Accordingly, intra_luma_mpm_idx may be signaled and thus an intra-prediction mode of a current mode may be derived.

For another example, when intra_luma_ref_idx does not have a particular value (for example, 0), intra_luma_planar_flag may not be signaled. Accordingly, intra_luma_mpm_idx may be signaled and thus an intra-prediction mode of a current mode may be derived.

For another example, when matrix-based intra prediction is performed for a current block, that is, when intra_mip_flag has a particular value (for example, 1), intra_luma_flag may not be signaled. Accordingly, intra_luma_mpm_flag or intra_luma_mpm_idx may be signaled and thus an intra-prediction mode of a current block may be derived.

For another example, when sub-block partition prediction is performed for a current block, that is, when intra_subpartitions_mode_flag has a particular value (for example, 1), intra_luma_mpm_flag or intra_luma_mpm_remainder may not be signaled. Accordingly, only intra_luma_mpm_idx may be signaled and thus an intra-prediction mode of a current mode may be derived.

For another example, when combined inter and intra prediction (CIIP) is performed on a current block, that is, when ciip flag has a particular value (for example, 1), intra_luma_mpm_flag, intra_luma_mpm_idx or intra_luma_mpm_remainder may not be signaled, and an intra-prediction mode of a current block may be derived as a Planar mode.

Hereinafter, configuring a reference sample (S820) will be described in detail according to an embodiment of the present invention.

Based on an intra-prediction mode that is derived in the above-described deriving of an intra-prediction mode (S810), a reference sample for intra prediction may be constructed. Hereinafter, in the present specification, a current block may mean a prediction block or a sub block that has a smaller size and/or shape than a prediction block.

A reference sample may be constructed by using one or more reconstructed samples adjacent to a current block or a combination thereof. In addition, filtering may be performed for a constructed reference sample.

The number and/or position of reconstructed sample lines, which are used to configure a reference sample, may be different according to the position of a current block within a coding tree block. Here, each reconstructed sample in a multiplicity of reconstructed sample lines may be used as a reference sample as it is. Alternatively, a reference sample may be generated by performing predetermined filtering for a reconstructed sample and using a filtered reconstructed sample. Reconstructed samples, to which a filter is applied, may belong to a same reconstructed sample line or different reconstructed sample lines.

The constructed reference sample may be expressed as ref[m, n], and a neighboring reconstructed sample with or without filtering applied thereto may be expressed as rec[m, n]. Here, m or n may be a predetermined integer indicating the position of a sample. In addition, when the position of a top left sample within a current block is (0, 0), the position of a reference sample adjacent to the top left of the current block may be set as (-1, -1).

In order to configure a reference sample, availability may be determined for a neighboring reconstructed sample. Here, when the neighboring reconstructed sample is located outside at least one region of picture, slice, tile and CTU, the sample may be determined to be unavailable. In addition, when constrained intra prediction is performed for a current block and the neighboring reconstructed sample is located in a block that is encoded/decoded by inter prediction, the sample may be determined to be unavailable.

When a neighboring reconstructed sample is determined to be unavailable, another available neighboring reconstructed sample may be used to replace the unavailable sample.

For example, starting from the bottom left sample position, an adjacent available sample may be used and replace an unavailable sample.

In addition, an unavailable sample may be replaced by using a combination of available samples. For example, an unavailable sample may be replaced by using an average value of available samples located on either side of the unavailable sample.

In addition, unavailable samples may be replaced by using information on available reference samples. Here, an unavailable sample may be replaced by using not the value of an adjacent available reference sample but an arbitrary value. The arbitrary value may be either an average value of available sample values or a value considering a gradient of available sample values. Alternatively, both an average value and a gradient may be used. Here, a gradient may be determined based on a difference value of adjacent available samples. Alternatively, apart from the average value, a maximum value, a minimum value, a median value or a weighted sum, to which an arbitrary weight is applied, may be used. Here, an arbitrary weight may be determined based on a distance between an available sample and an unavailable sample.

The above methods may be applied to all the top and left reference samples or only for an arbitrary direction. In addition, when a reference sample line of a current block is configured by using a multiplicity of reference sample lines, the methods may also be applied.

Whether or not filtering is to be performed for one or more constructed reference samples may be determined based on at least one of an intra-prediction mode of a current block and the size/shape of a block. When filtering is performed, a filter type may become different according to at least one of an intra-prediction mode of a current block and the size and shape of a block.

When sub-block partition prediction is performed for a current block, a reference sample for each sub block may be constructed. Here, the horizontal or vertical length of a reference sample may be twice the horizontal or vertical length of each sub block.

For example, when the size of a current block is MxN and the current block is horizontally partitioned into four equal parts so that each sub block has a size of Mx(N/4), a reference sample for sub block may have a horizontal length of $2*M$ and a vertical length of $2*(N/4)$. In other words, based on the size of a block where prediction and transform are performed, a reference sample with $2*$horizontal length and $2*$vertical length may be constructed.

Hereinafter, performing intra prediction (S830) will be described in detail according to an embodiment of the present invention.

Intra prediction for a current block may be performed based on an intra-prediction mode and a reference sample that are derived by the above-described deriving of an intra-prediction mode (S810) and the above-described configuring of a reference sample (S820).

When a derived intra-prediction mode is a DC mode, an average value of the one or more constructed reference samples may be used. Herein, filtering may be performed for one or more prediction samples located on the boundary of a current block. Prediction through DC mode may be differently performed based on at least one of the size and shape of a current block. For example, the range of a reference sample used in a DC mode may be specified based on the size and/or shape of a current block and a reference sample line indicator.

FIG. 11 is a view for explaining an embodiment of DC prediction according to the size and/or shape of a current block according to an embodiment of the present invention.

Referring to (a) of FIG. 11, when a current block is square, DC prediction may be performed by using an average value of the top and left samples of the current block.

In addition, when a current block is not square, a neighboring sample adjacent to the left or top of the current block may be selectively used. For example, as illustrated in (b) of FIG. 11, when a current block is rectangular, DC prediction may be performed by using an average value of reference samples adjacent to the longer between the horizontal length and vertical length of the current block.

In addition, when the size of a current block is a predetermined size or within a predetermined range, a predetermined sample of a reference sample line indicated by a reference sample line indicator may be selected among the top or left reference samples of the current block, and DC prediction may be performed by using an average value of samples thus selected.

The predetermined size may mean a fixed size of NxM that is predefined in an encoder/decoder. Here, N and M are integers greater than 0 and may be the same or different.

The predetermined range may mean a threshold value for selecting a reference sample of a current block. The threshold value may be implemented as at least one of a maximum value and a minimum value. Herein, a minimum value and/or a maximum value may be a fixed value that is predefined in an encoder/decoder or a variable value that is encoded in an encoder and is signaled.

As described above, an average value of one or more reference samples may be used for DC prediction. For calculation of an average value, division using the number of reference samples may be performed. Here, when the number of reference samples is $2^n$ (n is a positive integer), the division may be performed by being replaced by a binary shift operation.

In the case of a non-square block, if both the top and left reference samples are used, the number of reference samples may not be $2^n$. In this case, a shift operation may not be used instead of the division operation. Accordingly, as in the above embodiment, the division operation may be replaced by the shift operation by using only $2^n$ top or left reference samples.

When an intra-prediction mode is a Planar mode, a weighted sum considering a distance from at least one or more constructed reference samples may be used according to the position of a target sample for intra prediction of a current block.

When an intra-prediction mode is a directional mode, one or more reference samples existing on and around a predetermined angular line at the position of a target sample of intra prediction may be used.

When the directional prediction is performed, an intra-prediction mode may be changed to a predetermined mode based on the shape of a current block. In other words, when the intra-prediction mode is a directional mode and the horizontal size and the vertical size of a block are different from each other, the intra-prediction mode may be changed to a predetermined mode based on a ratio between the horizontal size and the vertical size. A ratio between the width and height of a block (whRaito) may be determined by whRatio = Abs ( Log2(nW/nH) ). Here, nW and nH may be the horizontal and vertical lengths of a block respectively, and Abs(x) may represent an absolute value of x.

For example, the horizontal size of a current block is larger than the vertical size thereof, a predetermined directional mode that is predicted from bottom left may be changed to a directional mode that is predicted from top right. In other words, when all the following conditions are satisfied, a predetermined offset may be applied to an intra-prediction mode and thus the intra-prediction mode may be changed by predModeIntra = predModeIntra + 65. Here, predModeIntra may represent an intra-prediction mode.

(1) The horizontal size of a block is larger than the vertical size thereof.
(2) predModeIntra is equal to or greater than 2.
(3) predModeIntra is smaller than a predetermined mode. Here, when whRatio is 1, a predetermined mode may be 8, and when whRatio is greater than 1, the predetermined mode may be (8 + 2*whRatio). Alternatively, a predetermined mode may be fixed to (8 + 2*whRatio) irrespective of the size of whRatio.

In addition, the vertical size of a current block is larger than the horizontal size thereof, a predetermined directional mode that is predicted from top right may be changed to a mode that is predicted from bottom left. In other words, when all the following conditions are satisfied, a predetermined offset may be applied to an intra-prediction mode and thus the intra-prediction mode may be changed by predModeIntra = predModeIntra - 67.

(1) The vertical size of a block is larger than the horizontal size thereof.
(2) predModeIntra is equal to or less than 66.
(3) predModeIntra is larger than a predetermined mode. Here, when whRatio is 1, a predetermined mode may be 60, and when whRatio is greater than 1, the predetermined mode may be (60 - 2*whRatio). Alternatively, a predetermined mode may be fixed to (60 - 2*whRatio) irrespective of the size of whRatio.

When prediction is performed by partitioning a current block into sub blocks, each sub block may be predicted by commonly using one intra-prediction mode that is derived based on the current block. In this case, the intra-prediction mode may be changed to a predetermined mode based on the shape of a sub block (for example, the horizontal and vertical sizes of a block). In other words, an intra-prediction mode of the current block may be derived by using a neighboring intra-prediction mode based on the size of the current block. Based on the horizontal and vertical sizes of a sub block obtained by partitioning the current block, the derived intra-prediction mode of the current block may be changed to a predetermined mode.

For example, the size of a current block may be 32x32, an intra-prediction mode (predModeIntra) may be 4, and sub blocks may be constructed by partitioning the current block into four equal parts in the horizontal direction. Here, based on the size 32x8 of each sub block, the intra-prediction mode (predModeIntra) 4 may be changed by applying the above method. In other words, since whRatio is 2, the horizontal size of a sub block is larger than the vertical size thereof, predModeIntra is greater than 2, and predModeIntra is less than (8 + 2*2), the intra-prediction mode may be changed to 69 (= 4 + 65).

For another example, the size of a current block may be 32x8, an intra-prediction mode (predModeIntra) may be 4, and sub blocks may be constructed by partitioning the current block into four equal parts in the vertical direction. Here, based on the size 8x8 of each sub block, the intra-prediction mode (predModeIntra) 4 may be changed by applying the above method. However, in this case, since the horizontal and vertical sizes of a sub block become the same by applying the method, an intra-prediction mode may not be changed.

When the directional prediction is performed, an interpolation filter may be determined based on at least one of the size and/or shape of a current block, a horizontal length, a vertical length, and an intra-prediction mode. Here, the interpolation filter may include a first interpolation filter and a second interpolation filter. For example, the first interpolation filter may be a cubic filter, and the second interpolation filter may be a Gaussian filter.

According to an embodiment, an interpolation filter may be determined by comparing a predetermined threshold value with a difference value between a horizontal mode or a vertical mode and an intra-prediction mode (preModeIntra) of a current block. The difference value (Diff) may be determined as follows.

$$\text{Difference value (Diff)} = \text{Min ( Abs( predModeIntra} - 50 \text{ ), Abs ( predModeIntra} - 18 ) )$$

In other words, the difference value (Diff) may be determined as the smaller (Min) of an absolute value (Abs) of difference between a vertical mode (50) and an intra-prediction mode (predModeIntra) of a current block and an absolute value (Abs) of difference between a horizontal mode (18) and the intra-prediction mode (predModeIntra) of the current block.

When the difference value is equal to or less than a predetermined threshold, the interpolation filter may be determined as a first interpolation filter. When the difference value exceeds the threshold, the interpolation filter may be determined as a second interpolation filter.

According to an embodiment, an interpolation filter may be determined based on a predetermined threshold (TH) that is determined by using a combination of a horizontal size and a vertical size of a current block. Here, the combination (S) of the horizontal size and vertical size of the current block may be determined as follows.

Combination of the horizontal size and vertical size of a current block (S) = (Log2(nTbW) + Log2(nTbH) ) >> 1

In other words, the combination (S) of the horizontal size and vertical size of the current block may be determined as an average value between a log value (Log2) of the horizontal size (nTbW) of the current block and a log value (Log2) of the vertical size (nTbH) of the current block.

Table 1 shows an example of determining a threshold based on a combination of the horizontal size and vertical size of a current block.

Depending on a combination of the horizontal size and vertical size of the current block, a threshold may be determined as shown in Table 1.

Table 1

|       | S=2 | S=3 | S=4 | S=5 | S=6 |
|-------|-----|-----|-----|-----|-----|
| TH[S] | 16  | 14  | 2   | 0   | 0   |

Here, when the difference value (Diff) is equal to or less than a threshold (TH), the interpolation filter may be determined as a first interpolation filter. When the difference value exceeds the threshold, the interpolation filter may be determined as a second interpolation filter.

Table 2 shows an example of determining a threshold based on a combination of the horizontal size and vertical size of a current block.

In addition, since a first interpolation filter and a second interpolation filter are determined according to the threshold, when an interpolation filter is selected by changing the threshold as shown in Table 2, compression efficiency may be improved.

Table 2

|       | S=2 | S=3 | S=4 | S=5 | S=6 |
|-------|-----|-----|-----|-----|-----|
| TH[S] | 16  | 14  | 4   | 0   | 0   |

Consequently, when a combination (S) of the horizontal size and vertical size of a current block is 2, it may be always be determined as a first interpolation filter. Meanwhile, when S is 3, if an intra-prediction mode difference value (Diff) is equal to or less than 14, it may be determined as a first interpolation filter. Otherwise, that is, if the intra-prediction mode difference value (Diff) exceeds 14, it may be determined as a second interpolation filter. When the S is equal to or greater than 5, it may be always be determined as a second interpolation filter.

Alternatively, when neither Table 1 nor Table 2 is used, the threshold (TH) may be derived through a separate formula.

For example, the following formula may be used to derive the threshold (TH).

$$\text{TH} = 1 << ( 6 - \text{S} )$$

In other words, as shown in the formula above, a threshold (TH) may be determined based on a combination (S) of the horizontal size and vertical size of a current block. For example, according to the formula, when S are 2, 3, 4, 5 and 6, TH may be 16, 8, 4, 2 and 1, respectively.

Alternatively, the combination (S) of the horizontal size and vertical size of a current block may be determined to be the log value of the horizontal size or the log value of the vertical size of the current block based on an intra-prediction mode of the current block.

For example, when an intra-prediction mode of a current block is larger than the diagonal mode 34, the log value of the horizontal length (Log2(nTbW)) of the current block may be determined as the combination (S) of the horizontal size and vertical size of the current block. In other words, when an intra-prediction mode of a current block is larger than the diagonal mode 34, S may be Log2 (nTbW).

In addition, when an intra-prediction mode of a current block is equal to or less than the diagonal mode 34, the log value of the vertical length (Log2(nTbH)) of the current block may be determined as the combination (S) of the horizontal size and vertical size of the current block. In other words, when an intra-prediction mode of a current block is equal to or less than the diagonal mode 34, S may be Log2 (nTbH).

For another example, a size combination may be determined by comparing an intra-prediction mode of a current block and a value that is obtained by applying a predetermined offset to the diagonal mode 34. For example, when an intra-prediction mode of a current block is larger than 34+6, the log value of the horizontal length of the current block may be determined as the combination (S) of the horizontal size and vertical size of the current block. Alternatively, when an intra-prediction mode of a current block is less than 34-6, the log value of the vertical length of the current block may be determined as the combination (S) of the horizontal size and vertical size of the current block. Here, when none of the conditions are satisfied, the log value of an average value of the horizontal length and vertical length of a current block may be determined as the combination (S) of the horizontal size and vertical size of the current block.

According to an embodiment, an interpolation filter may be determined based on at least one of reference sample line-related information for a current block (for example, intra_luma_ref_idx) and sub-block partition prediction information (for example, intra_subblock_flag, intra_subpartitions_mode_flag, intra_subblock_type_flag, intra_subpartitions_split_flag, etc.). Here, when an intra-prediction mode is a mode (for example, 2, 34, 66) copying a reference sample at an integer position, no interpolation filter may be determined, and the reference sample at the integer position may be copied and predicted. Alternatively, among filter coefficients of a first interpolation filter, a filter coefficient corresponding to an integer position may be used.

Table 3 to Table 6 show examples of determining an interpolation filter based on an intra-prediction mode, reference sample line-related information, and sub-block partition prediction information.

For example, as shown in Table 3, when a reference sample line indicator does not have a particular value (for example, 0) (for example, intra_luma_ref_idx != 0), a first interpolation filter may be used to perform directional prediction.

For another example, as shown in Table 3, when prediction is performed by partitioning a current block into sub-blocks (for example, intra subblock flag = 1), an interpolation filter may be determined based on at least one of an intra-prediction mode of a current block, a horizontal size and a vertical size of the current block. According to this method, when a predetermined condition is satisfied without comparison with a threshold, a first interpolation filter may be used.

Table 3

| Intra Prediction Mode | Intra_luma_ref_idx != 0 | Intra_subblock_flag = 1 | Otherwise |
|---|---|---|---|
| (Mode $\geq$ 34 && W $\leq$8) or (Mode < 34 && H $\leq$8) | First interpolation filter | First interpolation filter | First or second interpolation filter based on comparison with threshold |
| Otherwise | | First or second interpolation filter based on comparison with threshold | |

For example, referring to Table 3, when an intra-prediction mode of a current block is equal to or greater than 34 and a horizontal length (W) of a current block is equal to or less than 8, or when an intra-prediction mode of a current block is less than 34 and a vertical length (H) of the current block is equal to or less than 8, an interpolation filter may be differently determined depending on a reference sample line indicator and/or whether or not prediction is performed by partitioning the current block into sub-blocks.

For example, when a reference sample line indicator is not 0 (for example, intra_luma_ref_idx != 0), a first interpolation filter may be selected irrespective of whether or not the condition for an intra-prediction mode of a current block is satisfied.

For another example, when the condition for an intra-prediction mode of a current block is satisfied and prediction is performed by partitioning the current block into sub-blocks (for example, intra_subblock_flag = 1), a first interpolation filter may be selected.

For another example, when the condition for an intra-prediction mode of a current block is not satisfied and prediction is performed by partitioning the current block into sub-blocks (for example, intra subblock flag = 1), a first interpolation filter or a second interpolation filter may be selected through a comparison between an intra-prediction mode of the current block and a threshold.

For another example, when a reference sample line indicator is 0 (for example, intra_luma_ref_idx = 0) and a current block is not partitioned into sub-blocks (for example, intra subblock flag != 1), a first interpolation filter or a second interpolation filter may be selected through a comparison between an intra-prediction mode of the current block and a threshold, irrespective of whether or not the condition for an intra-prediction mode of a current block is satisfied.

When prediction is performed by partitioning a current block into sub-blocks, a predetermined condition of the example may be removed, thereby reducing complexity.

Referring to Table 4, directional prediction may be performed by determining a first interpolation filter or a second interpolation filter through a method of comparing an intra-prediction mode of a current block and a threshold.

Table 4

| Intra Prediction Mode | Intra_luma_ref_idx != 0 | Intra_subblock_flag = 1 or Otherwise |
|---|---|---|
| interpolation prediction mode | First interpolation filter | First or second interpolation filter based on comparison with threshold |

For example, referring to Table 4, when an intra-prediction mode of a current block is an interpolation prediction mode and a reference sample line indicator is not 0 (for example, intra_luma_ref_idx != 0), a first interpolation filter may be selected. Alternatively, when a reference sample line indicator is 0 (for example, intra_luma_ref_idx = 0) or when prediction is performed by partitioning a current block into sub-blocks (for example, intra subblock flag = 1), a first interpolation filter or a second interpolation filter may be selected through a comparison between an intra-prediction mode of the current block and a threshold.

For example, when it is determined that a filter is applied for a reference sample and a reference sample line indicator is not 0, a first interpolation filter may be always applied. Meanwhile, when none of the two conditions are satisfied, an interpolation filter may be determined through a comparison with the threshold.

Table 5

| Intra Prediction Mode | Intra_luma_ref_idx != 0 or Intra_subblock_flag = 1 | Otherwise |
|---|---|---|
| Interpolation prediction mode | First interpolation filter | First or second interpolation filter based on comparison with threshold |

For example, referring to Table 5, when an intra-prediction mode of a current block is an interpolation prediction mode and a reference sample line indicator is not 0 (for example, intra_luma_ref_idx != 0) or prediction is performed by partitioning the current block into sub-blocks (for example, intra subblock flag = 1), a first interpolation filter may be selected. Alternatively, when a reference sample line indicator is 0 (for example, intra_luma_ref_idx = 0) and a current block is not partitioned into sub-blocks, a first interpolation filter or a second interpolation filter may be selected through a comparison between an intra-prediction mode of the current block and a threshold.

For example, when a reference sample line indicator (intra luma ref idx) is not 0 or prediction is performed by partitioning a current block into sub-blocks in the horizontal or vertical direction, a cubic filter may be selected as an interpolation filter.

For example, when a reference sample line (intra_luma_ref_idx) is 0 and a current block is not partitioned into sub-blocks, an interpolation filter may be determined by comparing the above-described 'difference value (Diff) between an intra-prediction mode of a current block and a horizontal mode or a vertical mode' and the above-described predetermined threshold (TH). Specifically, when the difference value (Diff) is greater than the threshold (TH), a Gaussian filter may be selected as an interpolation filter. Alternatively, on the contrary, when the difference value (Diff) is equal to or less than the threshold (TH), a cubic filter may be selected as an interpolation filter. Here, as described above, the difference value (Diff) may be calculated by the following formula.

$$\text{Difference value (Diff)} = \text{Min ( Abs( predModeIntra} - 50 \text{ ), Abs ( predModeIntra} - 18 \text{ ) )}$$

In other words, the difference value (Diff) may be determined as the smaller (Min) of an absolute value (Abs) of difference between a vertical mode (50) and an intra-prediction mode (predModeIntra) of a current block and an absolute value (Abs) of difference between a horizontal mode (18) and the intra-prediction mode (predModeIntra) of the current block.

In addition, as described above, the threshold (TH) may be determined based on a combination (S) of the horizontal size and vertical size of a current block. Here, the combination (S) may be determined as follows.

$$\text{Combination (S)} = (\, \text{Log2 (nTbW)} + \text{Log2 (nTbH)} \,) \gg 1$$

In other words, the combination (S) may be determined as an average value between a log value (Log2) of the horizontal size (nTbW) of a current block and a log value (Log2) of the vertical size (nTbH) of the current block.

As a variant example, the threshold (TH) may be determined according to the combination (S) of the horizontal size and vertical size of the current block, as shown in Table 6.

Table 6

|       | S=2 | S=3 | S=4 | S=5 | S=6 | S=7 |
|-------|-----|-----|-----|-----|-----|-----|
| TH[S] | 24  | 14  | 2   | 0   | 0   | 0   |

Table 7

| Intra Prediction Mode | Intra_luma_ref_idx != 0 | Intra_subblock_flag = 1 | Otherwise |
|---|---|---|---|
| Interpolation prediction mode | First interpolation filter | Second interpolation filter | First or second interpolation filter based on comparison with threshold |

In addition, referring to Table 7, when an intra-prediction mode of a current block is a interpolation prediction mode and a reference sample line indicator is not 0 (for example, intra_luma_ref_idx ! = 0), a first interpolation filter may be selected. Alternatively, when prediction is performed by partitioning a current block into sub-blocks (for example, intra subblock flag = 1), a second interpolation filter may be selected. Alternatively, when none of the two conditions are not satisfied, one of a first interpolation filter and a second interpolation filter may be selected through a comparison between an intra-prediction mode of a current block and a threshold.

In the case of a positional information-based intra-prediction mode, a reconstructed sample block, which is generated based on encoded/decoded or derived positional information, may be used as an intra-prediction block of a current block. Alternatively, a decoder may search and derive a reconstructed sample block that is to be used as an intra-prediction block of a current block.

Whether or not a positional information-based intra-prediction mode is applied to a current block may be explicitly signaled as a flag for the current block or may be implicitly derived. In the present specification, a flag indicating whether or not a positional information-based intra-prediction mode is applied to a current block may be referred to as an intra block copy (IBC) flag.

For example, when a tile group including a current block is I tile group that does not refer to other pictures and the current block is not a skip block, the IBC flag may be signaled.

In addition, when a tile group including a current block is I tile group and the current block is not a general intra-prediction mode, the IBC flag may be signaled.

Availability information indicating whether or not a positional information-based intra-prediction mode is available at an upper level (for example, sequence level, etc.) of a current block may be signaled. Here, the IBC flag may be explicitly signaled only when the availability information indicates available.

When the IBC flag is not signaled, the IBC flag value may be implicitly derived based on the attribute of a tile group to which a current block belongs.

For example, when a current block belongs to I tile group, the IBC flag value may be derived as a value of available information.

In addition, when a current block belongs to P or B tile group, the IBC flag value may be derived as 0.

When the IBC flag value is 1, it may mean that a positional information-based intra-prediction mode is applied to a current block. When the IBC flag value is 0, it may mean that a positional information-based intra-prediction mode is not applied to a current block.

Positional information may be restored to perform positional information-based intra prediction. Both a current block and a reconstructed sample block are included in a current picture, and positional information may be information on a difference of position between the current block and the reconstructed sample block. Here, restoring positional information may be similar to a way of reconstructing a motion vector of inter prediction.

For example, like a merge mode in inter prediction, positional information may be restored from the positional information of a neighboring block. In this regard, information indicating a merge mode (for example, MergeFlag=1) may be signaled, and a merge candidate list including N (N is a positive integer) candidates may be configured.

For example, N may be 5. In other words, a merge candidate list including five merge candidates may be configured. Here, five merge candidates may be the same as five spatial merge candidates of inter prediction, and the priority order for being added to a merge candidate list may also be the same. All the five spatial merge candidates may be included in a merge candidate list. In addition, when the number of candidates included in a merge candidate list is less than 5, an additional candidate may be included.

Here, the positional information of an additional candidate may an average or a weighted average of the positional information of two candidates that are selected according to a predetermined rule from candidates, which are already included in a merge candidate list. The two selected candidates may be the first and second candidates of a merge candidate list.

Alternatively, a candidate that is selected according to a predetermined rule from a list of candidates, which are used for intra prediction based on the positional information of a previous block, may be included as additional candidate of a current block. As signaled index information is applied to a merge candidate list thus configured, the positional information of a current block may be restored.

For example, positional information may be restored as a sum of predicted positional information of the positional information and residual positional information. In this regard, information indicating that it is not a merge mode may be signaled (for example, MergeFlag = 0), and the candidate of a predictor may be the left block and top block of a current block.

Herein, a list may be configured by using the positional information of a left block and the positional information of a top block, and the predicted positional information of a current block may be derived by applying a signaled index. When two or less pieces of predicted positional information are included in a list, the rounded-off information of predicted positional information that is already included and/or zero positional information may be added to the list.

When luma information and chroma information are partitioned into the same tree structure, the positional information for a chroma block may be derived based on the positional information for a luma block. On the other hand, when luma information and chroma information are partitioned into different tree structures, a chroma block may be partitioned into sub-blocks, each of which has a predetermined size (for example, 4x4), and the positional information of each sub-block may be derived based on the positional information of a luma block at the corresponding position.

Derived positional information may be updated into a predetermined list to be used for deriving the positional information of a next block. Here, the predetermined list may mean the above-described 'a list of candidates that are used for intra prediction based on the positional information of a previous block'. Here, it may be confirmed whether or not positional information to be added is already included in the list. When the same positional information is included in a list, the corresponding positional information is removed from the list, and the positions of pieces of positional information succeeding the removed positional information are moved, thereby filling the place of the removed positional information. Then, the positional information to be added may be added to the final position of the list. When there is no same positional information in a list, the positional information to be added may be added at the end of the list.

When positional information for a current block is derived, the information may be used to generate a prediction block of the current block. A picture to which positional information is to be applied may be a restored current picture. For example, when inter prediction is performed by using a restored current picture as a reference picture and using positional information as a motion vector, a prediction block of a current block may be generated from the restored current picture.

Intra prediction for a chroma signal may be performed by using a restored luma signal of a current block. In addition, by using one restored chroma signal Cb of a current block or the residual signal of Cb, intra prediction for another chroma signal Cr may be performed.

Intra prediction may be performed by combining one or more prediction methods described above. For example, an intra-prediction block for a current block may be constructed through a weighted sum of a block, which is predicted by using a predetermined non-directional intra-prediction mode, and a block that is predicted by using a predetermined directional intra-prediction mode. Here, a weight may be differently applied according to at least one of an intra-prediction mode of a current block, the size of a block and the position of a sample.

Alternatively, in the case of a chroma block, an intra-prediction block for the chroma block may be constructed through a weighted sum of a block, which is predicted by using a predetermined intra-prediction mode, and a block that is predicted by using a restored signal of a luma block. Here, a predetermined intra-prediction mode may be one of the modes used for deriving an intra-prediction mode of a chroma block. In the case of a chroma block, as described above, whether or not a final prediction block is constructed by using a weighted sum of two prediction blocks may be signaled through encoded information.

In the case of a directional mode, based on a directional prediction mode, the reference sample constructed above may be reconstructed. For example, when the directional prediction mode is a mode using all the reference samples existing on the left or top, a one-dimensional arrangement may be configured for the left or top reference samples. Alternatively, a top reference sample may be constructed by moving a left reference sample. A top reference sample may be constructed by using a weighted sum of one or more left reference samples.

Alternatively, different directional intra predictions may be performed in units of a predetermined sample group of a current block. Here, a predetermined sample group unit may be a block, a sub-block, a line or a single sample.

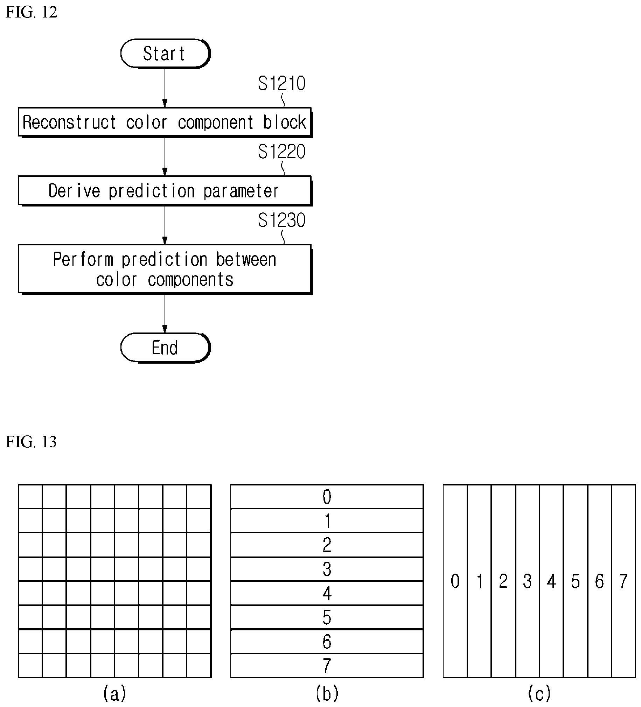

FIG. 12 is a view for explaining a process of performing intra prediction between color components according to an embodiment of the present invention.

According to an embodiment of the present invention, intra prediction between color components may be performed.

Referring to FIG. 12, a process of performing intra prediction between color components may include reconstructing a color component block (S1210), deriving a prediction parameter (S1220) and/or performing prediction between color components (S 1230). However, the process may not be limited to the steps.

A color component may mean at least one of a luma signal, a chroma signal, Red, Green, Blue, Y, Cb and Cr. Prediction for a first color component may be performed by using at least one of a second color component, a third color component, and a fourth color component. Herein, a signal of a color component used for prediction may be at least one of an original signal, a restored signal, a residual signal, and a prediction signal.

When intra prediction is performed for a second color component target block, a sample of a corresponding block of a first color component, which corresponds to the second color component target block, or a sample of a neighboring block of the corresponding block, or both may be used.

For example, when intra prediction is performed for a chroma component block Cb or Cr, a reconstructed luma component block Y corresponding to the chroma component block may be used.

Alternatively, when intra prediction is performed for a Cr component block, a Cb component block may be used.

Alternatively, when intra prediction is performed for a fourth component block, a combination of at least one or more among a first color component block, a second color component block and/or a third color component block, which correspond to the fourth component block, may be used.

Whether or not intra prediction between color components is possible may be determined based on a coding parameter of a current block. The coding parameter of the current block may include at least one of a slice type including the current block, whether or not the current block is dual-tree split, and the size and shape of the current block.

For example, when the size of a target block is a CTU size, exceeds a predetermined size or is within a predetermined size range, it may be determined that intra prediction between color components is implementable for the target block.

Specifically, when a current block is included in an I-slice and the luma component and the chroma component of the current block are not dual-tree split, it may be determined that intra prediction between color components is implementable for the current block. Dual-tree splitting may mean that the luma component and the chroma component of a current block are split according to separate tree structures.

In addition, when the slice type of a target block is not I-slice, it may be determined that intra prediction between color components is implementable for the target block. Accordingly, for example, when the slice type of a target block is P-slice or B-slice, it may be determined that intra prediction between color components is implementable for the target block.

In addition, when the shape of a target block is a predetermined shape, it may be determined that intra prediction between color components is implementable for the target block. Here, if a target block is rectangular, intra prediction between color components may not be performed and the above-described embodiment may be implemented in the opposite way.

When it is determined that intra prediction between color components is implementable for a current block, intra prediction between color components may be performed for the current block. Alternatively, when it is determined that intra prediction between color components is implementable for a current block, information on whether or not intra prediction between color components is applied to the current block may be separately signaled. In this case, based on information on whether or not intra prediction between color components is applicable to a current block, whether or not to apply intra prediction between color components to the current block may be ultimately determined.

Whether or not to perform intra prediction between color components may also be determined based on at least one coding parameter of a corresponding block to a prediction target block and a neighboring block of the corresponding block.

For example, when a corresponding block is inter-predicted in the constrained intra prediction (CIP) environment, intra prediction between color components may not be performed.

In addition, when an intra-prediction mode of a corresponding block is a predetermined mode, intra prediction between color components may be performed.

In addition, whether or not to perform intra prediction between color components may be determined based on at least one piece of information among pieces of CBF (Coding Block Flag) information of a corresponding block and a neighboring block. Here, the CBF information may be information showing whether or not there is a residual signal.

The coding parameter is not limited to a prediction mode of a block, and various parameters available for encoding/decoding may be used.

Referring to FIG. 12, in order to perform intra prediction between color components, the step of reconstructing a color component block may be performed (S1210).

When a second color component block is predicted by using a first color component block, the first color component block may be reconstructed.

For example, when the color space of an image is YcbCr and the ratio among color components is one of 4:4:4, 4:2:2 and 4:2:0, the size of a block between color components may be different. Accordingly, when a second color component block is predicted by using a first color component block with a different size, the first color component block may be reconstructed to make the two blocks have a same size. In this case, the reconstructed block may include at least one of a sample of a first color component corresponding block and a sample of a neighboring block.

In the above-described step of constructing a reference sample, an indicator (for example, intra_luma_ref_idx) corresponding to a predetermined line among a multiplicity of reference sample lines may be signaled. Here, in the reconstructing step, reconstruction may be performed by using a predetermined line corresponding to the signaled indicator.

For example, when a reference sample line indicator (intra_luma_ref_idx) is 3, reconstruction may be performed by using a fourth reference sample line adjacent to a first color component corresponding block. Here, when reconstruction is performed by using two or more reference sample lines, a third reference sample line may be additionally used.

In addition, when a reference sample line indicator (intra luma ref idx) is 1, reconstruction may be performed by using a second reference sample line adjacent to a first color component corresponding block.

Here, the reconstruction process may not use a reference sample line that is not indicated by the reference sample line indicator. For example, the reference sample line indicator indicates one of a first reference sample line, a second reference sample line, and a fourth reference sample line, a third reference sample line may not be used in the reconstruction process. In other words, when intra prediction is performed on a current block, a sample corresponding to the third reference sample line may not be accessible and obtained from a memory.

The method of using the indicator in the reconstruction process may be used when a first color component block and a second color component block have a same split scheme.

For example, when both a first color component block and a second color component block in one CTU have a same single-tree split scheme, the indicator-based reconstruction process may be performed.

In the reconstruction process, when at least one of the boundary of a second color component target block and the boundary of a first color component block corresponding thereto is the boundary of a predetermined region, a reference sample used for reconstruction may be differently selected. Here, the top and left reference sample lines may be different in number. In addition, the predetermined region may be at least one of picture, slice, tile, CTU and CU.

For example, when the upper boundary of a first color component corresponding block is the boundary of the predetermined region, reconstruction may be performed by using not a top reference sample but only a left reference sample.

In addition, when the left boundary of a first color component corresponding block is the boundary of the predetermined region, reconstruction may be performed by using not a left reference sample but only a top reference sample.

In addition, N top reference sample lines and M left reference sample lines may be used. Here, N may be less than M. For example, when an upper boundary is the boundary of the predetermined region, N may be 1. Alternatively, when a left boundary is the boundary of the predetermined region, M may be 1.

In addition, irrespective of whether or not it is the boundary of the predetermined region, reconstruction may be performed by using N top reference sample lines and/or M left reference sample lines of the first color component corresponding block.

According to an embodiment of the present invention, in order to perform intra prediction between color components, the step of deriving a prediction parameter may be performed (S1220).

A prediction parameter may be derived by using at least one of a reference sample of a first color component corresponding block, which is reconstructed in the step S1210, and a reference sample of a second color component prediction target block. Hereinafter, in the present specification, a first color component and a first color component block may mean a reconstructed first color component and a reconstructed first color component block, respectively.

For example, a prediction parameter may be derived by adaptively using a reference sample of the reconstructed first color component based on an intra-prediction mode of a first color component corresponding block. Herein, a reference sample of a second color component may also be adaptively used based on the intra-prediction mode of the first color component corresponding block.

According to an embodiment of the present invention, in order to perform intra prediction between color components, the step of performing prediction between color components may be performed (S1230).

When a prediction parameter is derived in the step S1220, intra prediction between color components may be performed by using at least one of the derived prediction parameters.

The method of prediction between color components may also be applied to an inter-prediction mode. For example, when inter prediction is performed for a current block, inter prediction may be performed for a first color component, and prediction between color components may be performed for a second color component. For example, the first color component may be a luma component, and the second color component may be a chroma component.

In addition, the prediction between color components may be adaptively performed according to a coding parameter of a first color component.

For example, whether or not to perform the prediction between color components may be determined according to the CBF information of the first color component. Here, the CBF information may be information showing whether or not there is a residual signal.

In other words, when the CBF of the first color component is 1, prediction between color components may be performed for a second color component. On the other hand, when the CBF of the first color component is 0, not prediction between color components but inter prediction may be performed for a second color component.

In addition, a flag indicating whether or not prediction between color components is performed may be separately signaled. Here, whether or not prediction between color components is performed may be determined based on a CCLM indicator (cclm mode flag). For example, when a CCLM indicator (cclm mode flag) is 1 (or true), it may be determined that prediction between color components is performed for a chroma block. If there is no CCLM indicator (cclm mode flag) value, it may be determined that no prediction between color components is performed.

When prediction between color components is performed, if an encoding mode of a first color component is an inter-prediction mode, prediction between color components may be performed for a second color component.

For example, when inter prediction is performed for a current block, inter prediction may be performed for a first color component, and prediction between color components may be performed for a second color component. Here, the first color component may be a luma component, and the second color component may be a chroma component.

Prediction between color components may be performed by using a reconstructed sample or a prediction sample of the luma component. For example, after inter prediction for the luma component is performed, prediction for a chroma component may be performed by applying a parameter of prediction between color components for a prediction sample. Here, the prediction sample may mean a sample for which at least one of motion compensation, motion correction, overlapped block motion compensation (OBMC) and bidirectional optical (BIO) flow is performed.

The prediction between color components may be adaptively performed based on a coding parameter of a first color component. For example, whether or not to perform the prediction between color components may be determined according to the CBF information of the first color component. The CBF information may be information showing whether or not there is a residual signal.

In other words, when the CBF of the first color component is 1, prediction between color components may be performed for a second color component. On the other hand, when the CBF of the first color component is 0, not prediction between color components but inter prediction may be performed for a second color component.

In addition, a flag indicating whether or not the prediction between color components is performed may be signaled. For example, whether or not prediction between color components is performed may be signaled in units of CU or PU. Here, whether or not prediction between color components is performed may be determined based on a CCLM indicator (cclm mode flag).

When the coding parameter of the first color component satisfies a predetermined condition, a flag indicating whether or not prediction between color components is performed may be signaled.

For example, when the CBF of a first color component is 1, whether or not color component prediction is performed may be determined by signaling a flag indicating whether or not prediction between color components is performed.

When prediction between color components is performed for the second color component, an inter-picture motion prediction or compensation value for the second color component may be used.

For example, inter-picture motion prediction or compensation for a second color component may be performed by using inter-prediction information for a first color component, and prediction may be performed through a weighted sum of a value of prediction between color components and an inter-picture motion compensation value for a second color component.

Alternatively, when an inter-prediction mode of a current block is a merge mode, prediction for a second color component of the current block may be performed through a weighted sum of a value, which is predicted by using motion information corresponding to a merge index, and a value that is predicted by performing prediction between color components.

Here, a first color component block used for performing prediction between color components may be at least one of a predicted value from inter prediction (using a merge mode, for example) and a reconstructed value.

In addition, a weight for the weighted sum may be 1:1.

Hereinafter, the step of predicting a residual signal (S840) will be described according to an embodiment of the present invention.

According to an embodiment, for a first residual signal of a current block, prediction may be performed in units of at least one of a sample line within a current block, a sample, and a predetermined group, and thus a second residual signal may be generated. Here, the first residual signal may be a signal corresponding to a difference between an original block and a prediction block or a signal that is generated by decoding a transform coefficient. The second residual signal may be a signal that is generated by adding or subtracting the first residual signal in at least one unit of a sample line within a current block, a sample, and a predetermined group. The predetermined group may be a multiplicity of samples or a multiplicity of sample lines.

FIG. 13 is a view for explaining an example of sample line unit-prediction according to an embodiment of the present invention.

According to an embodiment, a second residual block may be generated by performing sample line unit-prediction for a first residual block that is generated based on a difference between an original block and a prediction block. For example, referring to FIG. 13, sample line unit-prediction may be performed for a current block with 8x8 size illustrated in (a) of FIG. 13 either in the vertical direction like in (b) of FIG. 13 or in the horizontal direction like in (c) of FIG. 13.

When sample line unit-prediction is performed in the vertical direction as illustrated in FIG. (b) of 13, the prediction is not performed for line 0 of a first residual block, and line 0 of the first residual block may be allocated to line 0 of a second residual block. In other words, second residual block [ x ][ 0 ] = first residual block [ x ][ 0 ]. Here, the residual block [ x ][ y ] may represent a residual sample value of the coordinate (x, y).

In addition, for line n of a first residual block, a difference between the line n and line n-1 taken as a predicted value may be generated as a second residual signal. For example, second residual block [ x ][ y ] = first residual block [ x ][ y ] - first residual block [ x ][ y-1 ].

Entropy encoding may be performed for a residual sample value of the second residual block.

In addition, the method related to (b) of FIG. 13 may also be applied to a case where sample line unit-prediction is performed in the horizontal direction as illustrated in (c) of FIG. 13.

The method of (b) of FIG. 13 and the method of (c) of FIG. 13 may correspond to the above-described vertical residual signal prediction and horizontal residual signal prediction, respectively.

According to an embodiment, a second residual block may be generated by performing sample line unit-prediction or reconstruction for a first residual block that is generated by entropy decoding. For example, referring to FIG. 13, sample line unit-prediction or reconstruction may be performed either in the vertical direction like in (b) of FIG. 13 or in the horizontal direction like in (c) of FIG. 13.

When sample line unit-prediction or reconstruction is performed in the horizontal direction as illustrated in (c) of FIG. 13, the sample line unit-prediction and reconstruction are not performed for line 0 of a first residual block, and line 0 of the first residual block may be allocated to line 0 of a second residual block. In other words, second residual block [ 0 ][ y ] = first residual block [ 0 ][ y ].

In addition, for line n of a first residual block, a sum of the line n and line n-1 taken as a predicted value may be generated as a second residual signal. For example, second residual block [ x ][ y ] = first residual block [ x ][ y ] + first residual block [ x-1 ][ y ].

A current block may be reconstructed by adding the generated second residual block and a prediction block that is generated through intra prediction. Here, an intra-prediction mode used for the intra prediction may have the same direction as the sample line unit-residual block prediction.

For example, when sample line unit-residual block prediction is performed in the horizontal direction, intra prediction may be performed by using mode 18 that is a horizontal intra-prediction mode.

Like the sample line unit-prediction, predetermined group unit-residual signal prediction may be performed. The above embodiments may be performed in the same method in an encoder and a decoder.

The above embodiments may be performed in the same method in an encoder and a decoder.

At least one or a combination of the above embodiments may be used to encode/decode a video.

A sequence of applying to above embodiment may be different between an encoder and a decoder, or the sequence applying to above embodiment may be the same in the encoder and the decoder.

The above embodiment may be performed on each luma signal and chroma signal, or the above embodiment may be identically performed on luma and chroma signals.

A block form to which the above embodiments of the present invention are applied may have a square form or a non-square form.

At least one of syntax elements (flags, indices, etc.) entropy-coded by the encoder and entropy-decoded by the decoder may use at least one of the following binarization methods.

Truncated Rice binarization method
K-th order Exp_Golomb binarization method
Restricted K-th order Exp_Golomb binarization method
Fixed-length binarization method
Unary binarization method
Truncated Unary binarization method
Truncated binary binarization method

The above embodiment of the present invention may be applied depending on a size of at least one of a coding block, a prediction block, a transform block, a block, a current block, a coding unit, a prediction unit, a transform unit, a unit, and a current unit. Herein, the size may be defined as a minimum size or maximum size or both so that the above embodiments are applied, or may be defined as a fixed size to which the above embodiment is applied. In addition, in the above embodiments, a first embodiment may be applied to a first size, and a second embodiment may be applied to a second size. In other words, the above embodiments may be applied in combination depending on a size. In addition, the above embodiments may be applied when a size is equal to or greater that a minimum size and equal to or smaller than a maximum size. In other words, the above embodiments may be applied when a block size is included within a certain range.

For example, the above embodiments may be applied when a size of current block is 8x8 or greater. For example, the above embodiments may be applied when a size of current block is 4x4 only. For example, the above embodiments may be applied when a size of current block is $16\times16$ or smaller. For example, the above embodiments may be applied when a size of current block is equal to or greater than $16\times16$ and equal to or smaller than 64x64.

The above embodiments of the present invention may be applied depending on a temporal layer. In order to identify a temporal layer to which the above embodiments may be applied, a corresponding identifier may be signaled, and the above embodiments may be applied to a specified temporal layer identified by the corresponding identifier. Herein, the identifier may be defined as the lowest layer or the highest layer or both to which the above embodiment may be applied, or may be defined to indicate a specific layer to which the embodiment is applied. In addition, a fixed temporal layer to which the embodiment is applied may be defined.

For example, the above embodiments may be applied when a temporal layer of a current image is the lowest layer. For example, the above embodiments may be applied when a temporal layer identifier of a current image is 1. For example, the above embodiments may be applied when a temporal layer of a current image is the highest layer.

A slice type or a tile group type to which the above embodiments of the present invention are applied may be defined, and the above embodiments may be applied depending on the corresponding slice type or tile group type.

In the above-described embodiments, the methods are described based on the flowcharts with a series of steps or units, but the present invention is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present invention.

The embodiments include various aspects of examples. All possible combinations for various aspects may not be described, but those skilled in the art will be able to recognize different combinations. Accordingly, the present invention may include all replacements, modifications, and changes within the scope of the claims.

The embodiments of the present invention may be implemented in a form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present invention, or well-known to a person of ordinary skilled in computer software technology field. Examples of the computer-readable recording medium include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory (RAM), flash memory, etc., which are particularly structured to store and implement the program instruction. Examples of the program instructions include not only a mechanical language code formatted by a compiler but also a high level language code that may be implemented by a computer using an interpreter. The hardware devices may be configured to be operated by one or more software modules or vice versa to conduct the processes according to the present invention.

Although the present invention has been described in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

**Industrial Applicability**

The present invention may be used to encode or decode an image.

**Claims**

1. An image decoding method, the image decoding method comprising:

   obtaining prediction information of a current block from a bitstream; and
   generating a prediction block of the current block by performing prediction based on the prediction information,
   wherein the prediction information comprises split prediction information of the current block,
   wherein the generating of the prediction block comprises,
   obtaining a reference sample from a neighboring block of the current block;
   applying an interpolation filter to the reference sample; and
   generating the prediction block by using the reference sample to which the interpolation filter is applied, and
   wherein the interpolation filter is determined based on the split prediction information of the current block.

2. The image decoding method of claim 1,
   wherein the interpolation filter is determined as one of two interpolation filters different from each other.

3. The image decoding method of claim 1,
   wherein the split prediction information of the current block comprises information on whether split prediction of the current block is performed and a split direction of the current block.

4. The image decoding method of claim 3,
   wherein the split direction of the current block is a vertical direction or a horizontal direction.

5. The image decoding method of claim 1,

   wherein the prediction information comprises information on a plurality of reference sample lines, and
   wherein the interpolation filter is determined based on information on the plurality of reference sample lines.

6. The image decoding method of claim 1,

   wherein the prediction information comprises matrix-based intra prediction mode information for the neighboring block of the current block, and
   wherein, when matrix-based intra prediction is performed on the neighboring block, an intra-prediction mode of the neighboring block is regarded as a Planar mode.

7. The image decoding method of claim 6,
   wherein the neighboring block is a block located on the bottom left or top right of the current block.

8. The image decoding method of claim 6,
   wherein, when an intra-prediction mode of a luma block of the current block is a matrix-based intra-prediction mode, an intra-prediction mode of a chroma block of the current block is derived as a Planar mode.

9. The image decoding method of claim 1,
   wherein the prediction information comprises residual signal prediction information of the current block, and an intra-prediction mode of the current block is determined based on the residual signal prediction information.

10. The image decoding method of claim 9,
    wherein the intra-prediction mode of the current block is determined as one of a horizontal prediction mode and a vertical prediction mode based on the residual signal prediction information.

**11.** An image encoding method, the image encoding method comprising:

> determining a prediction mode of a current block;
> generating a prediction block of the current block by performing prediction based on the prediction mode of the current block,; and
> encoding prediction information of the current block comprising the prediction mode of the current block,
> wherein the prediction information comprises split prediction information of the current block,
> wherein the generating of the prediction block comprises:
>
> > obtaining a reference sample from a neighboring block of the current block;
> > applying an interpolation filter to the reference sample; and
> > generating the prediction block by using the reference sample to which the interpolation filter is applied, and
> > wherein the interpolation filter is determined based on the split prediction information of the current block.

**12.** The image encoding method of claim 11,
wherein the interpolation filter is determined as one of two interpolation filters different from each other.

**13.** The image encoding method of claim 11,
wherein the split prediction information of the current block comprises information on whether split prediction of the current block is performed and a split direction of the current block.

**14.** The image encoding method of claim 11,

> wherein the prediction information comprises information on a plurality of reference sample lines, and
> wherein the interpolation filter is determined based on information on the plurality of reference sample lines.

**15.** The image encoding method of claim 11,

> wherein the prediction information comprises matrix-based intra prediction mode information for the neighboring block of the current block, and
> wherein, when matrix-based intra prediction is performed on the neighboring block, an intra-prediction mode of the neighboring block is regarded as a Planar mode.

**16.** The image encoding method of claim 15,
wherein the neighboring block is a block located on the bottom left or top right of the current block.

**17.** The image encoding method of claim 15,
wherein, when an intra-prediction mode of a luma block of the current block is a matrix-based intra-prediction mode, an intra-prediction mode of a chroma block of the current block is derived as a Planar mode.

**18.** The image encoding method of claim 11,

> wherein the prediction information comprises residual signal prediction information of the current block, and
> an intra-prediction mode of the current block is determined based on the residual signal prediction information.

**19.** The image encoding method of claim 18,
wherein the intra-prediction mode of the current block is determined as one of a horizontal prediction mode and a vertical prediction mode based on the residual signal prediction information.

**20.** A non-transitory computer-readable recording medium configured to store a bitstream generated by an image encoding method,

> wherein the image encoding method comprises
> determining a prediction mode of a current block;
> generating a prediction block of the current block by performing prediction based on the prediction mode of the current block; and
> encoding prediction information of the current block comprising the prediction mode of the current block,
> wherein the prediction information comprises split prediction information of the current block,

wherein the generating of the prediction block comprises
obtaining a reference sample from a neighboring block of the current block;
applying an interpolation filter to the reference sample; and
generating the prediction block by using the reference sample to which the interpolation filter is applied, and
wherein the interpolation filter is determined based on the split prediction information of the current block.

FIG. 1

FIG. 2

200

210 220 230 255 260

bitstream → entropy decoding unit → dequantization unit → inverse transform unit → (+) → filter unit → reconstructed picture

240

intra
intra-prediction unit

250 270

inter
motion compensation unit ← reference picture buffer

FIG. 3

FIG. 4

0:Planar
1:DC

FIG. 5

FIG. 6

residual signal → [primary transform] → transform coefficients → [secondary transform] → [quantization] →

FIG. 7

Segment D    Segment E    Segment F

Segment C

Reference line 3
Reference line 2
Reference line 1
Reference line 0

Block Unit

Segment B

Segment A

FIG. 8

FIG. 9

FIG. 10

FIG. 11

(a)                              (b)

FIG. 12

```
        ( Start )
            |
            | S1210
            v
+---------------------------------+
| Reconstruct color component block|
+---------------------------------+
            |
            | S1220
            v
+---------------------------------+
|    Derive prediction parameter   |
+---------------------------------+
            |
            | S1230
            v
+---------------------------------+
|    Perform prediction between    |
|       color components           |
+---------------------------------+
            |
            v
         ( End )
```

FIG. 13

| | | | | | | | |
|---|---|---|---|---|---|---|---|
| | | | | | | | |
| | | | | | | | |
| | | | | | | | |
| | | | | | | | |
| | | | | | | | |
| | | | | | | | |
| | | | | | | | |
| | | | | | | | |

(a)

| 0 |
|---|
| 1 |
| 2 |
| 3 |
| 4 |
| 5 |
| 6 |
| 7 |

(b)

| 0 | 1 | 2 | 3 | 4 | 5 | 6 | 7 |
|---|---|---|---|---|---|---|---|

(c)

<table>
<tr><td colspan="2">INTERNATIONAL SEARCH REPORT</td><td>International application No.<br>**PCT/KR2020/007413**</td></tr>
</table>

**A. CLASSIFICATION OF SUBJECT MATTER**

*H04N 19/593(2014.01)i, H04N 19/11(2014.01)i, H04N 19/117(2014.01)i, H04N 19/132(2014.01)i, H04N 19/119(2014.01)i, H04N 19/176(2014.01)i, H04N 19/137(2014.01)i, H04N 19/186(2014.01)i*

According to International Patent Classification (IPC) or to both national classification and IPC

**B. FIELDS SEARCHED**

Minimum documentation searched (classification system followed by classification symbols)

H04N 19/593; H04N 19/105; H04N 19/117; H04N 19/186; H04N 19/50; H04N 19/523; H04N 19/577; H04N 19/597; H04N 19/60; H04N 19/132; H04N 19/119; H04N 19/176; H04N 19/137

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: bitstream, block, predict, partition, interpolation filter

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0042899 A (DIGITALINSIGHTS INC.) 27 April 2018<br>See paragraphs [0036]-[0057]. | 1-20 |
| Y | KR 10-2014-0122214 A (SAMSUNG ELECTRONICS CO., LTD.) 17 October 2014<br>See paragraphs [0356]-[0395]. | 1-20 |
| A | KR 10-2015-0035939 A (SAMSUNG ELECTRONICS CO., LTD.) 07 April 2015<br>See claims 1-4. | 1-20 |
| A | US 2015-0189276 A1 (NIPPON TELEGRAPH AND TELEPHONE CORPORATION)<br>02 July 2015<br>See paragraphs [0018]-[0023]. | 1-20 |
| A | JP 2015-015666 A (RENESAS ELECTRONICS CORP.) 22 January 2015<br>See claims 1-4. | 1-20 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>26 AUGUST 2020 (26.08.2020) | Date of mailing of the international search report<br><br>**31 AUGUST 2020 (31.08.2020)** |
|---|---|
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

INTERNATIONAL SEARCH REPORT
Information on patent family members

International application No.

**PCT/KR2020/007413**

| Patent document cited in search report | Publication date | Patent family member | Publication date |
|---|---|---|---|
| KR 10-2018-0042899 A | 27/04/2018 | CN 109845265 A<br>US 2019-0253707 A1<br>WO 2018-074626 A1 | 04/06/2019<br>15/08/2019<br>26/04/2018 |
| KR 10-2014-0122214 A | 17/10/2014 | AU 2012-276477 A1<br>BR 112013033703 A2<br>CA 2840638 A1<br>CN 103765884 A<br>DK 3448025 T3<br>EP 2728868 A2<br>ES 2701978 T3<br>HR P20182054 T1<br>HU E043939 T2<br>JP 2014-523185 A<br>KR 10-2015-0041760 A<br>LT 3232664 T<br>MX 2014000056 A<br>MY 168224 A<br>PH 12017501592 A1<br>PL 3448025 T3<br>RS 58193 B1<br>RU 2014102579 A<br>SI 3232664 T1<br>TW 201309035 A<br>US 2014-0133551 A1<br>WO 2013-002579 A2<br>ZA 201502811 B | 30/01/2014<br>04/07/2017<br>03/01/2013<br>30/04/2014<br>27/01/2020<br>07/05/2014<br>26/02/2019<br>08/02/2019<br>30/09/2019<br>08/09/2014<br>17/04/2015<br>27/12/2018<br>30/04/2014<br>15/10/2018<br>11/06/2018<br>30/04/2020<br>29/03/2019<br>10/08/2015<br>28/02/2019<br>16/02/2013<br>15/05/2014<br>03/01/2013<br>25/01/2017 |
| KR 10-2015-0035939 A | 07/04/2015 | AU 2011-239136 A1<br>BR 112012025309 A2<br>CA 2795620 A1<br>CN 102939752 A<br>EP 2556668 A2<br>JP 2016-187191 A<br>KR 10-2018-0084705 A<br>MX 2012011565 A<br>MY 166278 A<br>RU 2012146739 A<br>US 2015-0178893 A1<br>WO 2011-126281 A2<br>ZA 201600703 B | 01/11/2012<br>21/11/2017<br>13/10/2011<br>20/02/2013<br>13/02/2013<br>27/10/2016<br>25/07/2018<br>17/12/2012<br>22/06/2018<br>10/07/2014<br>25/06/2015<br>13/10/2011<br>30/11/2016 |
| US 2015-0189276 A1 | 02/07/2015 | CN 104718761 A<br>JP 5902814 B2<br>KR 10-2015-0013741 A<br>WO 2014-010583 A1 | 17/06/2015<br>13/04/2016<br>05/02/2015<br>16/01/2014 |
| JP 2015-015666 A | 22/01/2015 | CN 104284197 A<br>EP 2824931 A1 | 14/01/2015<br>14/01/2015 |

Form PCT/ISA/210 (patent family annex) (January 2015)

INTERNATIONAL SEARCH REPORT
Information on patent family members

International application No.

PCT/KR2020/007413

| Patent document cited in search report | Publication date | Patent family member | Publication date |
|---|---|---|---|
| | | JP 6120707 B2 | 26/04/2017 |
| | | US 2015-0010082 A1 | 08/01/2015 |

Form PCT/ISA/210 (patent family annex) (January 2015)